(19) Europäisches Patentamt
European Patent Office
Office européen des brevets

(11) **EP 3 247 053 B1**

(12) **EUROPEAN PATENT SPECIFICATION**

(45) Date of publication and mention
of the grant of the patent:
**04.09.2019 Bulletin 2019/36**

(21) Application number: **16305572.6**

(22) Date of filing: **17.05.2016**

(51) Int Cl.:
**H04B 7/06** *(2006.01)*   **H04W 72/12** *(2009.01)*
**H04B 7/204** *(2006.01)*   **H04B 7/185** *(2006.01)*
**H04B 7/0452** *(2017.01)*

(54) **AN IMPROVED METHOD OF EXCHANGING DATA BETWEEN AN APPARATUS AND USER TERMINALS**

VERBESSERTES VERFAHREN ZUM AUSTAUSCH VON DATEN ZWISCHEN EINER VORRICHTUNG UND BENUTZERENDGERÄTEN

PROCÉDÉ AMÉLIORÉ D'ÉCHANGE DE DONNÉES ENTRE UN APPAREIL ET DES TERMINAUX D'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.11.2017 Bulletin 2017/47**

(73) Proprietors:
• **Mitsubishi Electric R&D Centre Europe B.V.**
**1119 NS Schiphol Rijk Amsterdam (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **BRUNEL, Loïc**
**35708 RENNES Cedex 7 (FR)**
• **GUILLET, Julien**
**35708 RENNES Cedex 7 (FR)**

(74) Representative: **Cabinet Plasseraud**
**66, rue de la Chaussée d'Antin**
**75440 Paris Cedex 09 (FR)**

(56) References cited:
**CN-A- 103 796 319**

**Description**

The invention pertains to the field of apparatuses which are used to exchange data with user terminals, such as smartphones, for instance with a view of transferring these data to the terminals or to forward such data which are sent by the terminals to another piece of distant equipment.

More precisely, the invention pertains to the field of a method of transmitting data involving at least one apparatus for transmitting data and user terminals, or UTs, said apparatus and the UTs being adapted to exchange data using beams of electromagnetic waves for conveying said data, the apparatus comprising a plurality of groups of at least one antenna, each group at least one antenna being adapted for emitting one of said beams and to receive from the UTs signals representative of the data, each beam emitted by the apparatus defining a beam area within which at least part of the UTs is located, each group of at least one antenna being associated with time-frequency resources adapted to be used by said group of at least one antenna to generate the corresponding beam, respectively to receive a signal from at least one UT located in the corresponding beam area, said time-frequency resources being divided into time-frequency elements which each correspond to a given time slot and to a given frequency sub-band.

In such contexts, some of the groups of antennas share a same polarization configuration and a common frequency range. These two elements jointly define what is known as a color, the apparatus then being adapted to emit a plurality of beams having a same color.

In a known manner, beams having a same color tend to interfere with each other. Therefore, whether when generating beams to send the data or when receiving signals from the UTs from beam areas of a same color, interferences are observed.

A natural approach to reduce these interferences lies in optimizing the number of colors a satellite has. In fact, the higher the number of colors in a satellite, the lower the interference level between beams having the same color.

However, this approach translates into reducing the datarate of the satellite, which is undesirable.

CN103796319 discloses a method for user grouping in a multi-beam satellite communication system based on relative user locations in each satellite beam with regard the respective beam center in order to maximize the distance between users within each group of users. Further, different user groups are assigned to different frequency elements to achieve frequency multiplexing.

In a general manner, the known approaches aimed at improving the interference level between beams of a same color have proven unsatisfactory.

The invention proposes to improve this situation.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

To that end, the invention relates to a method of exchanging data involving at least one apparatus and user terminals, or UTs, said apparatus and the UTs being adapted to exchange data using electromagnetic waves for conveying said data, the apparatus comprising a plurality of groups of at least one antenna each group at least one antenna being adapted for emitting a beam of electromagnetic waves for sending said data to the UTs and to receive from the UTs signals representative of the data, each beam adapted to be emitted by the apparatus defining a beam area in which UTs may be located, each group of at least one antenna being associated with time-frequency resources adapted to be used by said group of at least one antenna to generate the corresponding beam, respectively to receive a signal from at least one UT located in the corresponding beam area, said time-frequency resources being divided into time-frequency elements which each correspond to a given time slot and, for said time slot, to a given frequency sub-band, the method comprising:

-    receiving measurements data from the UTs, said measurements data comprising position data representative at least of an angular position of the corresponding UT within the corresponding beam area,

-    for at least one time-frequency element, choosing at least one precoding subset respectively associated to one of the at least one time frequency element, each precoding subset being associated to all the groups of antennas respectively associated to a given beam area among one or more considered beam areas having a considered color, whereby two beam areas have the same color when the corresponding beams share a same polarization configuration and a common frequency range, each precoding subset comprising at most one UT from each of the considered beam areas, each precoding subset of the at least one precoding subset being chosen by selecting one or more UT each located in a different beam area among the considered beam areas as a function of at least respective angular positions of the UTs within the corresponding beam area and determined based on the position data sent by the UTs,

- generating at least one signal constructed as a function of the data destined to the UTs of the precoding subset or coming from the UTs of the precoding subset to transfer said data to the UTs or receive said data from the UTs using all or part of the groups of antennas associated to said at least one precoding subset.

According to an aspect of the invention, the time-frequency resources are divided into periods each comprising a plurality of time slots.

According to an aspect of the invention, choosing at least one precoding subset comprises, for at least one period, selecting the one or more UT of at least one precoding subset so that the time-frequency resources of at least one group of antennas for at least one time-frequency element of said period are not used to generate a beam or receive a signal from at least one UT.

According to an aspect of the invention, choosing at least one precoding subset comprises, for at least one period, defining the precoding subsets for the time-frequency elements of said period also as a function of a load constraint, whereby the time-frequency resources of said period are all used to generate a beam or receive signals from UTs.

According to an aspect of the invention, at least one UT of the precoding subsets of said period is also selected to form part of one or more precoding subset also as a function of a fairness criterion, whereby said at least one UT is selected as a function of the precoding subsets of at least one previous time slot and/or one following time slot so that for at least one beam area, the UTs of said beam area each belong to a same number of precoding subsets over a predetermined number of time slots.

According to an aspect of the invention, choosing at least one precoding subset comprises determining at least one reference beam area among the considered beam areas.

According to an aspect of the invention, said reference beam is determined as corresponding to the beam area which comprises the highest number of UTs among the considered beam areas.

According to an aspect of the invention, choosing at least one precoding subset further comprises:

- for each beam area different from the reference beam area among the considered beam areas:

    - constructing a distance matrix having elements which are each associated to a UT of the reference beam area and to a UT of the beam area and which each correspond to a value of a predetermined distance metric which is a function at least of the respective angular positions of the two considered UTs within the reference beam area, respectively within the beam area, and

    - applying an association algorithm through which each of the UTs of the reference beam area is respectively paired to at most one UT of the beam area so that an association metric function of the values of the distance metric between paired UTs is minimal,

- defining one or more precoding subset as each comprising one of the UTs of the reference beam area and all the UTs of the beam areas different from the reference beam area among the considered beam areas which are paired with said UT of the reference beam area.

According to an aspect of the invention, choosing at least one precoding subset further comprises:

- for each beam area different from the reference beam area among the considered beam areas:

    - constructing a distance matrix having elements which are each associated to a UT of the reference beam area and to a UT of the beam area and which each correspond to a value of a predetermined distance metric which is a function at least of the respective angular positions of the two considered UTs within the reference beam area, respectively within the beam area, and

    - applying an association algorithm through which each of the UTs of the reference beam area is respectively paired to the UT of the considered beam area corresponding to the value of the predetermined distance metric which is minimal within the distance matrix, whereby each UT of the beam area is paired to a chosen number of UTs from the reference beam area,

- defining one or more precoding subset as each comprising one of the UTs of the reference beam area and all the UTs of the beam areas different from the reference beam area among the considered beam areas which are paired with said UT of the reference beam area.

According to an aspect of the invention, choosing at least one precoding subset further comprises:

- for the reference beam area and each beam area different from the reference beam among the considered beam areas, associating to the UTs at least one rank within the corresponding beam area, said rank being defined as a function of the angular position of the considered UT within the considered beam area relative to a reference angular position within said beam area, said reference angular position being taken identical for each beam area,

- defining one or more precoding subset as each comprising the UTs which share a same rank within their respective beam area.

According to an aspect of the invention, choosing at least one precoding subset comprises, for at least one time-frequency element of said at least one time-frequency element:

- choosing a set of reference beam areas among the considered beam areas,

- for each beam area of the set of reference beam areas:

  - considering said beam area as a temporary reference beam area, and for each beam area different from the temporary reference beam area among the considered beam areas:

    - constructing a distance matrix having elements which are each associated to a UT of the temporary reference beam area and to a UT of the beam area and which each correspond to a value of a predetermined distance metric which is a function of at least the respective angular positions of the UT of the temporary reference beam area and of the UT of the beam area within the temporary reference beam area, respectively within the beam area, and

    - applying an association algorithm through which each of all or part of the UTs of the temporary reference beam area are respectively paired to the UT of the considered beam area so that a first association metric function of the value of the distance metric between paired UTs is minimal,

  - defining a temporary set of precoding subsets each comprising one of the UTs of the temporary reference beam area and all the UTs of the beam areas different from the temporary reference beam area which are paired with said one of the UTs of the reference beam area,

- for each temporary set of precoding subsets, determining a value of a second association metric defined at least as a function of the angular positions of the UTs of the temporary set of precoding subsets, and

- selecting each precoding subset of the temporary set of precoding subsets whose value of the second association metric is the lowest as the precoding subsets respectively associated to each of said at least one time-frequency element.

According to an aspect of the invention, choosing at least one precoding subset comprises, for at least one time-frequency element of said at least one time-frequency element:

- for each temporary set of precoding subsets among a predetermined ensemble of temporary sets of precoding subsets each comprising one UT of each of the considered beam areas of the considered color, determining a value of an association metric defined as a function of the angular positions of the UTs of the precoding subsets of the temporary set of precoding subsets,

- defining the at least one precoding subset for said at least one time-frequency element as one or more precoding subset comprised in the temporary set of precoding subsets which has the lowest association metric.

According to an aspect of the invention, choosing at least one precoding subset comprises, for at least one period comprising a given number of time-frequency elements, greater than or equal to the maximum number of UTs within a beam area among the considered beam areas:

- for each beam area among the considered beam areas:

- associating a rank with each UT of the beam area as a function of the angular position of said UT relative to a reference angular position within said beam area, said reference angular position being taken identical for each beam area,

- constructing a vector comprising UTs in descending or ascending order of their rank, each UT appearing a predetermined number of times which is a function of said given number of time-frequency elements in the period and the number of UTs in said beam area, in consecutive positions in the vector,

- defining one or more precoding subset of the period by associating for a given time-frequency element the UTs of the vectors which share a same position within the vectors respectively associated to each beam area.

According to an aspect of the invention, choosing at least one precoding subset comprises, for at least one period:

- implementing a resource allocation algorithm to determine, for each considered beam area, a number of precoding subsets each UT of said beam area will belong to for said period,

- in each beam area, associating a rank with each UT of the beam area as a function of at least of the angular position of said UT relative to a reference angular position within said beam area, said reference angular position being taken identical for each beam area,

- for each beam area, constructing a vector comprising UTs in descending or ascending order of their rank, each UT being comprised in said vector a same number of times as the number of times determined for the corresponding UT during said resource allocation algorithm, in consecutive positions in the vector,

- defining one or more precoding subset of the period by associating for a given time-frequency element the UTs of the vectors which share a same position within the vectors respectively associated to each beam area.

According to an aspect of the invention, choosing at least one precoding subset comprises dividing the UTs of each considered beam area into a plurality of groups each comprising one or more UTs.

According to an aspect of the invention, dividing the UTs of each beam into groups comprises:

- applying a predetermined spatial partition scheme to each beam area to partition said beam area into zones which each cover all or part of an angular portion of the corresponding beam area, whereby each zone has an equivalent zone in every other beam area having the same considered color, two equivalent zones covering same relative portions of their respective beam area relative to a center of the corresponding beam area, and

- within each beam area, defining each group as the UTs which are located in a given zone.

According to an aspect of the invention, the method further comprises :

- defining a period as comprising a number of time-frequency elements equal to or greater than the sum over the zones of one considered beam area of the highest numbers of UTs a group which is associated to the considered zone or to an equivalent zone comprises among all considered beam areas,

- for each group, choosing how many different precoding subsets of said period each UT of said group will form part of so that each UT belongs to at least one precoding subset,

- for each time-frequency element of said period, forming the corresponding precoding subset by selecting one UT belonging to a given group of a given beam area and randomly or arbitrarily selecting, for every other considered beam area, one UT from the group of the beam area which is associated to the zone of said beam area which is equivalent to the zone associated to the group of the so-selected UT, so that over said period, each UT belongs to as many precoding subsets as previously chosen.

According to an aspect of the invention, the groups have a quasi-constant size, whereby, within each beam area, the respective numbers of UTs the groups comprise are equal or differ by one.
According to an aspect of the invention, dividing the UTs into groups comprises :

- applying a predetermined spatial partition scheme to each beam area to partition said beam area into zones which each cover all or part of an angular portion of the corresponding beam area, whereby each zone has an equivalent zone in every other considered beam area, two equivalent zones covering same relative portions of their respective beam area relative to a center of the corresponding beam area, and

- for each beam area, defining each of a plurality of temporary groups as each including the UTs which are located in a given zone,

- for each beam area, until all the temporary groups have respective numbers of UTs which differ from 1 or less, reallocating to the temporary group having the lowest number of UTs one UT from the temporary group which, among the UTs in temporary groups having a number of UTs greater than a predetermined number, is the closest to the zone of said temporary group having the lowest number of UTs,

- defining the groups as the temporary groups obtained when all the temporary groups have respective numbers of UTs which differ from one or less, each group being associated to the same zone as that of the corresponding temporary group.

According to an aspect of the invention, dividing the UTs into groups comprises:

- applying a predetermined spatial partition scheme to each considered beam area to partition said beam area into zones which each cover all or part of an angular portion of the corresponding beam area, whereby each zone has an equivalent zone in every other considered beam area, two equivalent zones covering same relative portions of their respective beam area relative to a center of the corresponding beam area,

- for each beam area to which the spatial partition scheme was applied :

    - constructing a distance matrix having elements which each correspond to a value of a distance between a UT of the beam area and a zone of said beam area, and

    - implementing an association algorithm having at least one iteration during each of which each zone is associated to a UT so that the sum of distances between associated UTs and zones is minimal and the corresponding elements in the distance matrix are modified to prevent the corresponding UT to be associated to another zone in a further iteration, said association algorithm ending when all the UTs have been associated to a zone,

the method further comprising defining each group of each beam area as the UTs which have been associated to a same zone within said beam area through said association algorithm.

According to an aspect of the invention, choosing at least one precoding subset further comprises forming at least one precoding subset by selecting one UT belonging to a given group and randomly or arbitrarily selecting, for every other considered beam area, one UT from the group of said beam area which is associated to the zone of said beam area which is equivalent to the zone associated to the group of the so-selected UT.

According to an aspect of the invention, the method further comprises:

- defining at least one period comprising a number of time slots equal to or greater than the sum over the zones of one beam area among the considered beam areas of the highest numbers of UTs a group which is associated to the considered zone or to an equivalent zone comprises among all considered beam areas,

- for each group, choosing how many different precoding subsets of at least one period of said plurality of periods each UT of said group will form part of so that each UT belongs to at least one precoding subset, the choice being further made as a function of said fairness criterion,

- for each time-frequency element of said at least one period, forming the corresponding precoding subset by selecting one UT belonging to a given group and randomly or arbitrarily choosing, for every other considered beam area, one UT from the group of said beam area which is associated to the zone of said beam area which is equivalent to the zone associated to the group of said UT belonging to a given group, so that over said period, each UT belongs to as many precoding subsets as previously chosen.

According to an aspect of the invention, for at least one precoding subset, the time-frequency resources are used by all or part of the groups of antennas associated to said subset to generate a beam intended for the UT of said precoding subset located within the corresponding beam area, and generating at least one signal comprises generating, for each group of antennas of said all or part of the groups of antennas associated to said subset, a signal destined to be used by said group of antennas to generate the corresponding beam, said signal being generated as a function of the data destined to all the UTs belonging to said precoding subsets.

According to an aspect of the invention, the apparatus comprises a satellite having said plurality of antennas.

According to an aspect of the invention, the apparatus comprises a plurality of base stations located on the surface of the Earth, each base station comprising one or more antennas arranged in one or more groups of antennas.

The invention also relates to a computer program comprising instructions for the implementation of the method as defined above when the computer program is executed by a processor.

Further features and advantages of the invention will become more apparent by reading the following detailed description of the embodiments, which are given by way of non-limiting examples with reference to the appended drawings, in which:

- Figure 1 illustrates the elements which are involved in the method according to the invention;

- Figure 2 illustrates time-frequency resources;

- Figure 3 illustrates a model of the problem the method according to the invention is designed to solve;

- Figure 4 illustrates steps of the method according to the invention;

- Figure 5 illustrates a precoding subset in a schematic form;

- Figure 6 illustrates beam areas and corresponding UTs in these beam areas; and

- Figures 7a and 7b illustrate two possible zone definitions which may be used in the method according to the invention.

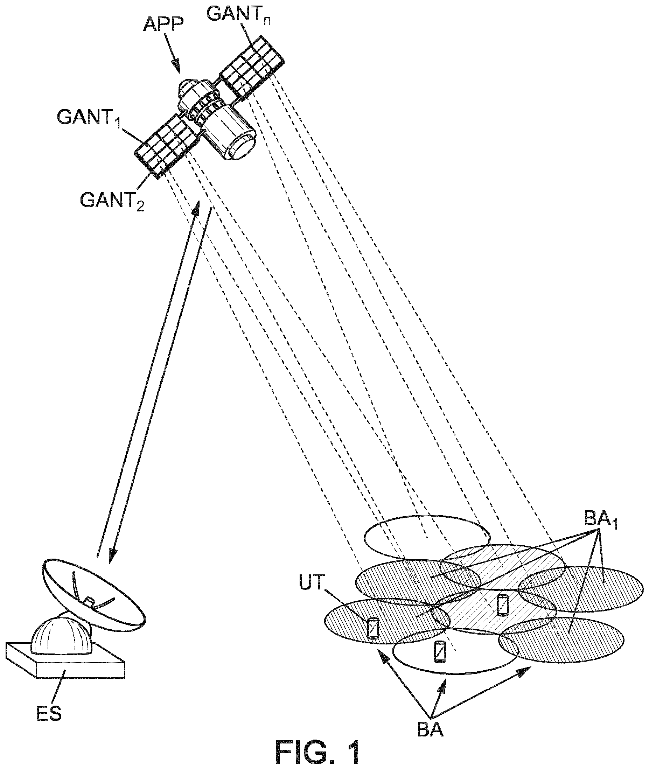

Figure 1 illustrates the elements which are involved in the method according to the invention.

These elements include an apparatus APP and user terminals UT, or UTs. The apparatus and the UTs are configured to exchange data using electromagnetic waves.

The data are for instance telecommunication data such as data generated during phone conversations, or user data of any known kind.

The apparatus is configured to send data to the UTs and receive data from the UTs using electromagnetic waves.

To that end, the apparatus comprises a plurality of antennas. The antennas are arranged in groups $GANT_1$, $GANT_2$, ..., $GANT_n$ each comprising at least one antenna, each group being adapted to generate a single beam of electromagnetic waves to convey the data, for instance in the form of a stream of data, and to receive from the UTs signals conveyed through electromagnetic waves generated by the UTs.

The antennas are schematically depicted in Figure 1, and are illustrated in the form of squares within each group.

A given antenna may be part of a plurality of groups, as an antenna may be used to generate different beams at a given time.

It should be noted that the antennas of a given group are not necessarily arranged in relative adjacent positions within the apparatus.

In a preferred embodiment, as illustrated in Figure 1, the apparatus is in the form of a satellite comprising a plurality of antennas which are each adapted to generate and receive such waves.

For instance, the satellite is a satellite of the High Throughput type, which offers a greater capacity than conventional satellites but with a similar spectrum. In addition, it is a multi-beam satellite.

The following description is given in a non-limiting manner for a configuration in which the apparatus is a satellite, although alternative embodiments described hereinafter are also envisaged.

In a known manner, the beam generated by a group of antennas presents a main lobe directed to a given region on the surface and side lobes which are unavoidable, and which are at least in part directed to other regions. These main and side lobes also determine the detection abilities and performances of the antenna in reception mode in which it receives electromagnetic waves from the UTs.

Each group of antennas defines a beam area BA over the surface of the earth, which corresponds to the preferred region of illumination of the group of antennas. In effect, the beam area corresponds to the region in which the highest power comes from the beam generated by the considered group of antennas, relative to the other groups of antennas.

In effect, even when not effectively generating a beam, a group of antennas still defines its beam area, which corresponds to its privileged region of detection.

Each beam area contains no UT or one or more UT.

The beam areas each have a center. This center may be the geometric center of the beam area, the barycenter of the beam area or the point in which the beam is received with the most energy in the beam area. For instance, they have any shape, such as a general circular or elliptical shape when the deformations of the terrain are accounted for. In addition, optionally, at least some of them partly overlap the neighboring beam areas.

Typically, the groups of antennas exhibit a polarization configuration and a given frequency range which define its emission and reception properties. For instance, the polarization configuration is chosen among two possible configurations such as right and left in circular polarization and vertical and horizontal in linear polarization.

A given set of frequency range and polarization configuration defines what is known as a color for each group of antennas and the corresponding beam area.

For instance, the satellite presents a plurality of colors.

At least two beams share a same polarization configuration and a common frequency range, and thereby have the same color, the corresponding beam areas having the same color by extension.

For instance, in the example of Figure 1, the beam areas referred to as $BA_1$ all have the same color, and there are four of them.

It should be noted that at a predetermined point in time, the respective frequency ranges allocated to the colors are modified. In other words, at a given point in time, it may be decided to modify the definition of the colors themselves.

It may also be decided to stop using certain groups of antennas and/or start using groups which were unused beforehand.

As is known and discussed above, beams having a same color tend to interfere with each other, particularly due to the fact that the side lobes of the groups of antennas are unavoidably directed to beam areas which are associated to other beams.

The apparatus further comprises time-frequency resources which are physical resources via which the beams are generated by the groups of antennas and via which the groups of antennas are used to receive the signals emitted by the UTs.

In effect, they correspond to physical resource blocks of the apparatus.

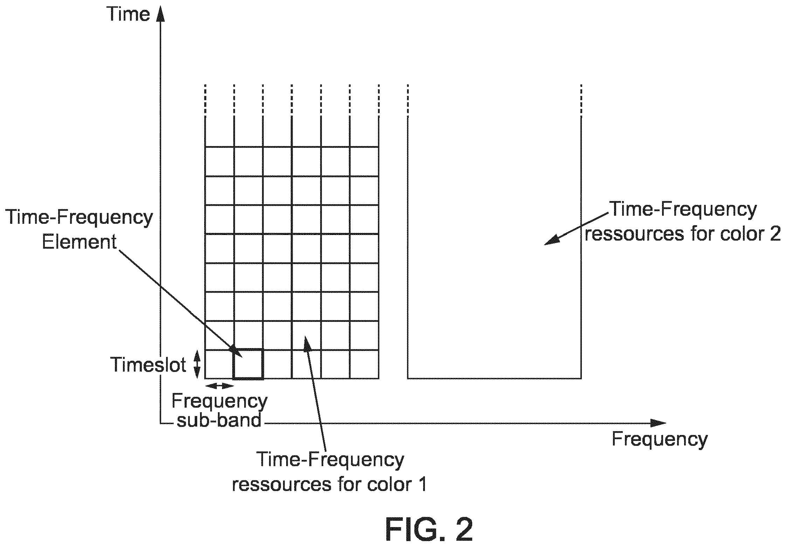

In reference to Figure 2, the time-frequency resources are divided into time-frequency elements which each correspond to a given time slot and, for said time slot, to a given frequency sub-band.

The time slot corresponds to a time lapse, and the corresponding frequency sub-band corresponds to the frequencies that may be used to generate a beam or receive a signal during the associated time slot. It should be noted that the union of the sub-bands corresponds to the frequency band (i.e. the frequency range) which is allocated to a given color.

Given its definition in time and frequency spaces, a given time-frequency element may be shared by a plurality of groups of antennas for emitting the corresponding beams or to receive signals from the UTs.

The time slots may be arranged in periods, which correspond to a plurality of consecutive time slots which are jointly considered for the needs of the invention.

Advantageously, the data which are conveyed through the satellite are destined to or come from an earth station ES located on the surface, which may itself be configured to pass on the data after an optional processing.

The satellite and the earth station exchange data over what is known as a feeder link. The exchanges between the satellite and the earth station are carried out using conventional communication technologies.

As for the UTs, they are adapted to generate data and send these data to the apparatus, and to receive data from the apparatus through the beams generated by the groups of antennas. For sending data, the UTs are configured to generate a signal conveyed through electromagnetic waves and adapted to be received by the antennas of the satellite, the antennas of the satellite then operating as receivers.

The UTs are electronic devices, such as smartphones, personal computers, rooftop reception devices or the like. The UTs include all the known components needed for their operation

In the following description, they are in a non-limiting manner depicted and described as smartphones, .In particular, the UTs include a processing module configured to handle the operations of the other components for the normal operations of the corresponding UT.

This processing module is in addition configured to generate position data which are representative of the position of the corresponding UT within the beam area of the satellite it is located in.

In particular, these position data are representative at least of an angular position of the corresponding UT within its beam area. Here, and as detailed below, the angular position of a UT corresponds to the angle defined by the position of UT within the beam area and a given reference direction passing through the center of the beam area.

Advantageously, the position data are also representative of a radial position of the corresponding UT, i.e. of the distance of the UT relative to the center of the beam area.

These data are destined to the satellite or to the earth station. In case they are destined to the latter, they may be communicated to the earth station without going through the satellite, and are for instance communicated through a land cable.

These position data are for instance generated through a known process. For instance, the processing device includes a positioning device specifically configured to generate these data, for instance based on GNSS signals (for Global Navigation Satellite System) or any other type of signal adapted to that end.

For instance, these data are generated with a given periodicity, and are regularly sent to the satellite.

It should be noted that the position data either comprise the angular positions in a direct form, i.e. the angular position is determined by the corresponding UT and is passed on, or merely contains information that allows this angular position to be determined from afar, for instance by the apparatus.

The method according to the invention will now be described in more details.

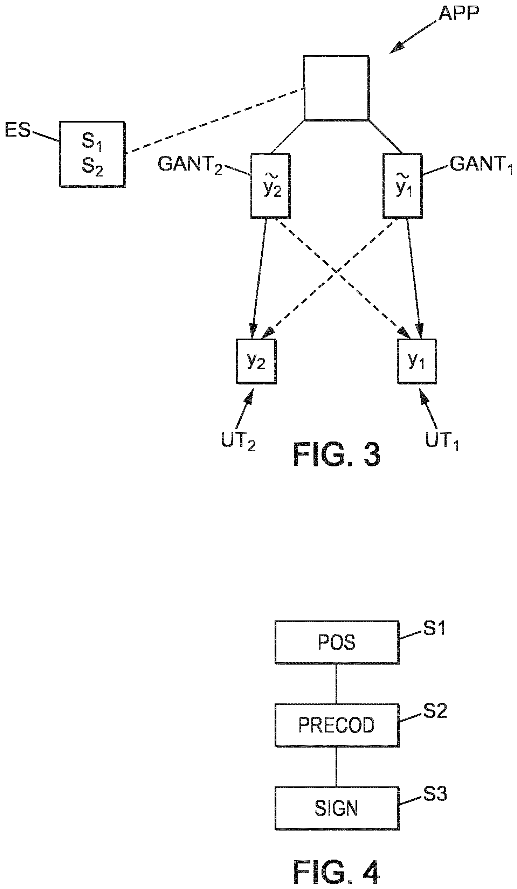

The purpose of the method according to the invention is to account for the interference phenomenon described above and which can be modeled as illustrated on Figure 3 for a configuration with two UTs $UT_1$ and $UT_2$ respectively located in two different beam areas having the same color for a descending configuration, i.e. a configuration in which the satellite generates beams for the two UTs. The illustrated configuration corresponds to a configuration which does not rely on precoding subsets as in the context of the invention.

Data $s_1$, $s_2$ respectively destined to $UT_1$ and $UT_2$ are sent to the satellite APP by the earth station ES using the feeder link through one or more signals. These signals are used by the satellite to generate respective signals $\widetilde{y_1}$ and $\widetilde{y_2}$ in the form of two beams respectively destined to $UT_1$ and $UT_2$ and which each are representative of the corresponding data $s_1$, $s_2$. The signals each go through what is known as a channel which defines all the phenomena to which the signals are submitted before becoming received signals $y_1$, $y_2$ at the UTs $UT_1$ and $UT_2$, such as the transformations due to their being conveyed as waves, their being transduced into electrical signals by the UTs and their undergoing interferences generated by the side lobes of the antennas which cause inter-beam interferences.

These phenomena can be modeled as follows, in a non-limiting linear configuration :

$$\begin{bmatrix} y_1 \\ y_2 \end{bmatrix} = \begin{bmatrix} \alpha_1^U & \alpha_1^I \\ \alpha_2^I & \alpha_2^U \end{bmatrix} \begin{bmatrix} s_1 \\ s_2 \end{bmatrix} + \begin{bmatrix} n_1 \\ n_2 \end{bmatrix} = H \begin{bmatrix} s_1 \\ s_2 \end{bmatrix} + \begin{bmatrix} n_1 \\ n_2 \end{bmatrix},$$

where $y_1$ and $y_2$ are the received signals on a given time-frequency element, $\alpha^U_1$ and $\alpha^U_2$ are the useful channel coefficients and $\alpha^I_1$ and $\alpha^I_2$ are the interference channel coefficients for $UT_1$ and $UT_2$, respectively. $n_1$ and $n_2$ represent the additive white Gaussian noise due to the signals being transformed by their reception at $UT_1$ and $UT_2$, respectively. The matrix $H$ with coefficients $\alpha$ is the channel matrix representing the channel through each beam to each UT.

The method according to the invention aims at reducing the impact of these phenomena, in particular the inter-beam interferences.

To that end, in reference to Figure 4, the method of transmitting data according to the invention comprises, for at least one color of the apparatus and for considered beam areas of this color, three main steps:

- a step S1 of receiving the position data sent by the UTs located in the considered beam areas so as to determine at least the angular positions of the UTs within their beam area,

- a step S2 of constructing one or more precoding subset of UTs based on at least the angular positions previously determined, and

- a step S3 of generating at least one signal as a function of the UTs of the precoding subset(s) constructed in step S2 so as to transfer the data destined to or coming from the UTs.

Advantageously, these steps are carried out by the apparatus APP. To that end, the apparatus comprises a module which is operatively coupled to the groups of antennas and to a communication interface via which the apparatus exchanges data with the earth station via the feeder link.

The module is configured to process the position data to determine at least the angular positions of the UTs, construct the precoding subset(s) and generate or trigger the generation of the at least one signal.

For instance, this module comprises one or more processor and one or more memory adapted for storing the position data and comprising one or more computer programs whose execution by the processor(s) translates into the method being carried out.

Alternatively, all or part of the method is implemented by the earth station, which then comprises a module adapted to carry out the corresponding steps.

The step of constructing the precoding subsets constitutes the core step of the method according to the invention, and is its main focus.

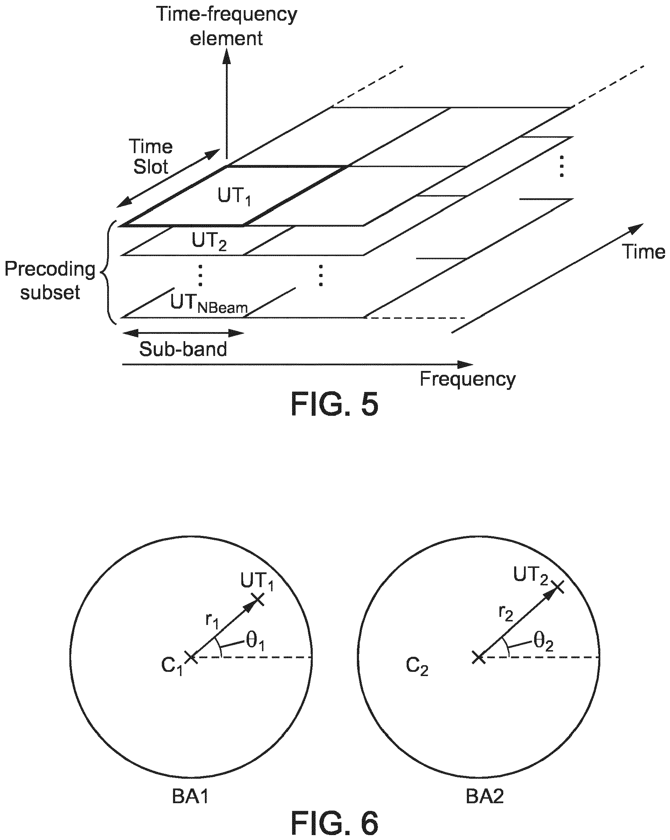

In reference to Figure 5, each precoding subset is associated to a given time-frequency element of the frequency resources. It is also associated to a single color. In addition, it is associated to all or part of the beam areas of the considered color, and to all the groups of antennas corresponding to the considered beam areas.

A given subset comprises, for each considered beam area of the considered color, at most one UT which is selected from the UTs of this beam area.

It should be noted that although a given subset is associated to all the groups of antennas corresponding to the considered beam areas, it may only be used for the operations of only part of them, as described more in details below.

However, preferably, a subset comprising UTs from a given set of beam areas is used for the operations of all the corresponding groups of antennas.

In addition, for the considered color, it may be that not all the beam areas of the considered color are used to construct a precoding subset. For instance, for a color having 10 beam areas, only 5 of these beam areas may be considered to define the precoding subset. As will be made more apparent, this means that the UTs of the subset are selected from the considered beam areas, but not from the beam areas of the considered color which are not considered themselves for the construction of the subset.

Advantageously, all the beam areas of the considered color are taken into consideration, but alternatively, at least one is not. Preferably, a plurality of beam areas is considered for constructing each subset.

These elements mean that constructing a given subset attached to a given time-frequency element involves:

- Considering a given color of the beam areas,

- Then considering all or part of the beam areas of this color to select UTs from in order to construct the subset (which implies that the corresponding groups of antennas are also considered),

- Constructing the subset *per se.*

The subset is then considered in step S3 for the operations of all or part of the groups of antennas thereby considered, and for the operations of the apparatus as a whole.

It should be noted that on Figure 5, the different UTs of a given subset being depicted at different levels superimposed on a same time-frequency element is merely for the sake of illustration, the UTs of a given subset all corresponding to a single time-frequency element.

It should also be noted that a time-frequency element may be associated to a plurality of subsets. In particular, this may be so when the considered beam areas only form part of the beam areas of a given color, and/or when two colors only differ by their polarization configuration (and have the same frequency range).

By denoting $V_{b,k}$ the index of the UT of beam area $b$ scheduled in time-frequency element $k$, the precoding subset for time frequency element k can be seen as column k of the matrix **V** with elements $V_{b,k}$:

$$\left[\mathbf{V}\right]_{bk} = V_{b,k} \in \left\{0, 1, 2, \cdots, N_{UT,b}\right\}, b = 1, \cdots, N_{Beam}; k = 1, \cdots, N_{Slot}$$

where $N_{UT,b}$ is the number of UTs in beam area $b$, $N_{Slot}$ is the number of time-frequency elements for a scheduling period and $N_{Beam}$ is the number of considered beam areas from which the UTs are selected. A value 0 as element $V_{b,k}$ means that no UT is scheduled in beam area $b$ scheduled in time-frequency element $k$. We denote $V_b$ the row b of matrix **V.**

In the context of the invention, the precoding subsets are constructed based on at least the angular positions of the UTs in the considered beam areas.

In reference to Figure 6, the position of a given $UT_i$ within its beam area is defined by its distance $r_i$ to the center of the beam area and by its angle $\theta_i$ within the beam area relative to a reference direction, which passes through the center of the beam area (and which is preferably taken identical for all considered beam areas). In Figure 1, $UT_1$ and $UT_2$ have their respective positions defined by their distance r1, r2 to the center of the corresponding beam area, and by the angle $\theta_1$, $\theta_2$ they define relative to the reference direction.

The principle of construction of the subsets revolves around forming the subsets by selecting UTs among the considered beam areas of the considered color which have positions relative to the center of the corresponding beam area which are close at least in terms of angle within their respective beam areas.

A plurality of principles revolving around this principle may be implemented to that end.

Regardless of which principle is considered, beyond being carried as a function of at least the angular position of the UTs, the construction of the subset may optionally also be carried out for one or more periods as a function of a load constraint, whereby the time-frequency resources associated to the considered groups of antennas of said period are all used to generate a beam or receive signals from UTs.

In other words, through this load constraint, also referred to as "full-load approach", the subsets are constructed so that for each considered time slot, all the time frequency resources allocated to the considered groups of antennas having the considered color are used.

This load constraint may optionally be applied in conjunction with a fairness criterion, whereby at least one UT of one precoding subset is selected as a function of the precoding subsets of at least one previous time slot and/or one following time slot so that for at least one considered beam area, the UTs of said beam area each belong to a same number of precoding subsets over a predetermined number of time slots.

## First principle

According to the invention, the first principle revolves around considering all the UTs within a given beam area of the considered color as forming part of a single group of UTs, as opposed to the second principle described hereinafter which revolves around dividing the UTs of a given beam area into a plurality of groups

This first principle can thus be described as a "without-group" approach.

This principle can be decomposed into two sub-principles:

- A first sub-principle which relies on defining at least one reference beam area within the beam areas of the considered color, and

- A second sub-principle which does not rely on defining a reference beam area.

## First sub-principle of the first principle

In a first set of embodiments of this sub-principle, the definition of the reference beam area is unique, in that the reference beam area is initially chosen and remains the same for the definition of the precoding subsets which are to be constructed for the chosen time-frequency elements.

For instance, the reference beam area is chosen as being the most populated beam area among the beam areas of the considered color. In other words, it is chosen as the one comprising the highest number of UTs.

In a first embodiment, at least one subset is constructed as follows for the considered beam areas of the considered color and for the considered time-frequency elements.

For each beam area different from the reference beam area among the considered beam areas

- constructing a distance matrix having elements which are each associated to a UT of the reference beam area and to a UT of the considered beam area and which each correspond to a value of a predetermined distance metric which is a function at least of the respective angular positions of the two considered UTs within the reference beam area, respectively within the considered beam area, and

- applying an association algorithm through which each of the UTs of the reference beam area is respectively paired to at most one UT of the considered beam area so that an association metric function of the values of the distance metric between paired UTs is minimal,

- defining one or more precoding subset as each comprising one of the UTs of the reference beam area and all the UTs of the beam areas different from the reference beam area among the considered beam areas which are paired with said UT of the reference beam area.

Preferably, precoding subsets are so constructed for a given number of time-frequency elements so that each UT of the reference beam area belongs to a single subset. More specifically, the number of time-frequency elements considered is $N_{UT,Max}$, which corresponds to the number of UTs the reference beam comprises.

The distance matrix has a $N_{UT,b} \times N_{UT,Max}$ dimensions, where $N_{UT,b}$ is the number of UTs the considered beam area comprises.

Each line of the matrix is associated to a UT of the considered beam area, and each column is associated to a UT of the reference beam area. Each element of the matrix corresponds to the value of the predetermined distance metric between the corresponding UTs.

As seen below, the distance metric defines a relative distance between two UTs, in that it is constructed based on at least the angular position of the UT of the considered beam area within its beam area, and at least the angular position of the UT of the reference beam area within the reference beam area.

The distance metric is noted w. This metric is advantageously chosen as one of the following metrics:

$$w\left(x_{b,u}, x_{b',u'}\right) = \left|x_{b,u} - x_{b',u'}\right|^2,$$

$$w\left(x_{b,u}, x_{b',u'}\right) = w\left(r_{b,u}\mathrm{e}^{j\theta_{b,u}}, r_{b',u'}\mathrm{e}^{j\theta_{b',u'}}\right) = \left|\mathrm{e}^{j\theta_{b,u}} - \mathrm{e}^{j\theta_{b',u'}}\right|^2 = 4 \times \left(1 - \cos\left(\theta_{b,u} - \theta_{b',u'}\right)\right)^2,$$

or

$$w\left(x_{b,u}, x_{b',u'}\right) = w\left(r_{b,u}\mathrm{e}^{j\theta_{b,u}}, r_{b',u'}\mathrm{e}^{j\theta_{b',u'}}\right) = \left|\left(\alpha \times r_{b,u} + \left(1-\alpha\right)\right)\mathrm{e}^{j\theta_{b,u}} - \left(\alpha \times r_{b',u'} + \left(1-\alpha\right)\right)\mathrm{e}^{j\theta_{b',u'}}\right|^2$$
$$0 \leq \alpha \leq 1$$

where $x_{b,u}$ and $x_{b',u'}$ designate the respective positions of UTs $u$ and $u'$ respectively located in beam areas b and b' relative to the center of the corresponding beam area.

It should be noted that optionally, the distance r in the metrics above may be defined as a distance relative to the center of the beam divided by a characteristic dimension of the considered beam area, such as a dimension defined based on the size of the beam area, for instance the radius of a circular beam area or the square root of the surface of the beam area.

The first metric is a position-based distance which intrinsically depends on the angular positions of the considered UTs (relative to a reference direction which passes through the center of the associated beam area and which is taken identical for both beam areas), but also depends on their distance to the center of the associated beam area.

The second metric is an angle-based distance which solely depends on the angular positions of the UTs relative to a reference direction which passes through the center of the associated beam area and which is taken identical for both beam areas.

The third metric is a generalization of the two previous metrics which includes a weighing factor for the distance and the angle of the considered UTs.

Preferably, for constructing the desired set of subsets, the distance metric is initially chosen and is used for constructing the distance matrix of all the beam areas.

Regarding the association metric which is noted G, in effect, the problem of constructing optimized precoding subsets can be seen as obtaining V as

$$\mathbf{V} = argmin_{\tilde{\mathbf{V}}}\, G(\mathbf{X}, \tilde{\mathbf{V}})$$

where **X** is the matrix with elements $x_{b,u}$. This problem can include the constraints discussed above about fairness and full-load.

In the context of the invention, the association metric G only depends on position of UTs in a same UT precoding subset.

Advantageously, the metric G is chosen among the following metrics:

- the sum of the values of the distance metric between pairs of UTs precoded together in all the considered beam areas of the considered color and all the considered time-frequency elements:

$$G\left(\mathbf{X}, \tilde{\mathbf{V}}\right) = \sum_{b=1}^{N_{Beam}} \sum_{b'=1}^{N_{Beam}} G_{b,b'}{}^{(2d)}\left(\begin{bmatrix}\mathbf{x}_b \\ \mathbf{x}_{b'}\end{bmatrix}, \begin{bmatrix}\tilde{\mathbf{V}}_b \\ \tilde{\mathbf{V}}_{b'}\end{bmatrix}\right)$$

$$G_{b,b'}{}^{(2d)}\left(\begin{bmatrix}\mathbf{x}_b \\ \mathbf{x}_{b'}\end{bmatrix}, \begin{bmatrix}\tilde{\mathbf{V}}_b \\ \tilde{\mathbf{V}}_{b'}\end{bmatrix}\right) = \sum_{k, \tilde{V}_{b,k} \neq 0, \tilde{V}_{b',k} \neq 0} w\left(x_{b,\tilde{V}_{b,k}}, x_{b',\tilde{V}_{b',k}}\right)$$

is a 2-dimensional metric
$w(x_{b,\tilde{V}_{b,k}}, x_{b',\tilde{V}_{b',k}})$ is a distance

$\mathbf{x}_b$ is the line $b$ of matrix $\mathbf{X}$

- a maximum of the values of the distance metric among all pairs of UTs precoded together in all the considered beam areas of the considered color and all the considered time-frequency elements:

$$G\left(\mathbf{X}, \tilde{\mathbf{V}}\right) = \max_{b,b',k} w\left(x_{b,\tilde{V}_{b,k}}, x_{b',\tilde{V}_{b',k}}\right)$$

$w\left(x_{b,\tilde{V}_{b,k}}, x_{b',\tilde{V}_{b',k}}\right)$ is a distance

- a sum over all the considered time-frequency elements of maxima of the values of the distance metric among pairs of UTs precoded together in all the considered beam areas of the considered color:

$$G\left(\mathbf{X}, \tilde{\mathbf{V}}\right) = \sum_{k,\tilde{V}_{b,k} \neq 0,\tilde{V}_{b',k} \neq 0} \max_{b,b'} \left(w\left(x_{b,\tilde{V}_{b,k}}, x_{b',\tilde{V}_{b',k}}\right)\right)$$

$w(x_{b,\tilde{V}_{b,k}}, x_{b',\tilde{V}_{b',k}})$ is a distance

During the association algorithm, once a UT of the reference beam has been paired, the corresponding values of the column in the distance matrix are modified so that this UT may not be paired with a further UT of the considered beam area. For instance, these values are then set to an infinity value.

Advantageously, for a full-load approach, the algorithm is repeated a number of times equal to $N_{It,b}=ceil(N_{UT,Max}/N_{UT,b})$, i.e. a number of times corresponding to the result of the division $N_{UT,Max}/N_{UT,b}$ rounded up to the superior integer.

Alternatively, it is only carried out once.

The details of the algorithm are then for instance as follows.

The scheduling period considered is set as $N_{Slot}$ equal to $N_{UT,Max}$ to ensure that each UT is served.

The reference beam area noted bref is set as the most loaded beam area among the considered beam areas of the considered color.

Then:

- For each beam area b, different from beam area bref

  ∘ the distance matrix M of size $N_{UT,b}$ x $N_{UT,Max}$ is constructed (distance between the intra-beam area position of a given UT in beam area b and intra-beam area position of a given UT in beam area bref in the sense of the chosen distance metric).
  ∘ For a full load approach,
  ▪ We define $N_{It,b}$ as equal ceil($N_{UT,Max}$ / $N_{UT,b}$) (the result of the division rounded up to the superior integer),
  ∘ otherwise
  ▪ we define $N_{It,b}$ as equal to 1,
  ∘ For iteration 1 to iteration $N_{It,b}$,

    ▪ a 2-dimensional association algorithm (e.g., Hungarian or Greedy) with M as input is carried out to find a maximum of $N_{UT,b}$ subsets of 2 UTs (for the last iteration, there is less than $N_{UT,b}$ subsets, i.e. $N_{UT,Max}$ -($N_{It,b}$-1) x $N_{UT,b}$ subsets), one UT belonging to the reference beam area bref and the other UT belonging to beam area b, these $N_{UT,b}$ subsets minimizing metric $G^{(2d)}$ for the two-dimensional case.
    ▪ Infinity values are put in columns of M corresponding to the $N_{UT,b}$ chosen UTs belonging to the reference beam area,

- Obtain $N_{Slot}$ subsets of $N_{Beam}$ UTs from the $N_{Beam}$-1 2-dimensional results, i.e. each subset comprising one of the UTs of the reference beam area and all the UTs of the beam areas different from the reference beam area associated by the 2-dimensional association algorithm with the UT of the reference beam area. They form matrix V.

In another embodiment of this first set of embodiments, the association algorithm allows the control over the number of precoding subsets each UT in the beam areas belongs to.

The maximum difference between the numbers of time-frequency elements the UTs in a given beam area are associated to is noted $\Delta_{Slot,Max}$ (value greater or equal to 1).

The principle of constructing the desired subsets is then as follows for the considered beam areas having the considered color and for the considered time-frequency elements:

- for each considered beam area different from the reference beam area and having the same considered color as the reference beam area:

  - constructing a distance matrix having elements which are each associated to a UT of the reference beam area and to a UT of the considered beam area and which each correspond to a value of a predetermined distance metric which is a function at least of the respective angular positions of the two considered UTs within the reference beam area, respectively within the considered beam area, and

  - applying an association algorithm through which each of the UTs of the reference beam area is respectively paired to the UT of the considered beam area corresponding to the value of the predetermined distance which is minimal within the distance matrix, whereby each UT of the beam area is paired to a chosen number of UTs from the reference beam area,

- defining one or more precoding subset as each comprising one of the UTs of the reference beam area and all the UTs of the beam areas different from the reference beam area and having the same considered color as the reference beam area which are paired with said UT of the reference beam area.

In effect, the details of the algorithm are as follows:
The scheduling period is set as $N_{Slot}$ equal to $N_{UT,Max}$ (the number of UTs in the reference beam area) to ensure that each UT is served.

Then:

- For each beam area b, different from beam area bref,

  ○ the distance matrix M of size $N_{UT,b} \times N_{UT,Max}$ is constructed in the same manner as described above,
  ○ We define $S_{bref}$ and $S_b$ as empty sets,
  ○ As long as there are values different from Infinity in M,

    ▪ the smallest value in M is found,
    ▪ the 2 corresponding elements are paired. The index 1 of the corresponding row of M is the UT of the beam area b and the index c of the corresponding column of M is the index of the UT of the of reference beam area bref, i.e. UT c of beam area b and UT 1 of reference beam area are in the same precoding subset,
    ▪ index c is added in set $S_{bref}$
    ▪ index 1 is added in set $S_b$.
    ▪ Infinity values are put in column c of M once UT c of the reference beam is paired,
    ▪ If UT 1 of beam area b was chosen at least (ceil($N_{UT,Max}/N_{UT,b}$)+$\Delta_{Slot,Max}$-1) times (where ceil is an operator which rounds up to the superior integer) or if ($N_{UT,b}$-card($S_b$)) equals ($N_{UT,Max}$- card($S_{bref}$)), then Infinity values are put in the corresponding line 1 of M

- Obtain $N_{slot}$ subsets of $N_{Beam}$ UTs from the $N_{Beam}$-1 2-dimensional results, i.e. each subset comprising one of the UTs of the reference beam area and all the UTs of the beam areas different from the reference beam area associated by the 2-dimensional association algorithm with the UT of the reference beam area. They form matrix **V.**

In another embodiment of the first set of embodiments, defining one or more subset comprises, for the considered beam areas of the considered color and for the considered time-frequency elements:

- for the reference beam area and each beam area different from the reference beam area and having the same considered color as the reference beam area, associating to the UTs at least one rank within the corresponding beam area, said rank being defined as a function of the angular position of the considered UT within the considered beam area relative to a reference angular position within said beam area, said reference angular position being taken identical for each beam area,

- defining one or more precoding subset as each comprising the set of UTs which share a same rank within their respective beam area.

In other words, a reference direction identical for each beam area is set, this direction defining a reference angle equal to 0 in the beam areas. This reference direction passes through the center of the considered beam area.

The details of a possible algorithm for this embodiment are as follows.

As previously, the scheduling period is set as $N_{Slot}$ equal to $N_{UT,Max}$ to ensure that each UT is served. $\Delta_{Slot,Max} \geq 1$ is set as a fairness constraint.

In each beam area, a rank is defined for each UT based on the angle their position defines relative to the reference angle.

Then the algorithm comprises:

- Ordering the UTs in each beam area in ascending or descending order of their angle value relative to the reference angle (i.e. by rank), this value being comprised between 0 and 360 degrees,

- For each beam area b, different from the reference beam area bref:

  ○ Define $V_{bref}$ as a vector with size $N_{slot}$ with elements 1 to $N_{slot}$,
  ○ Set Ntmp as ceil($N_{UT,Max}$ / $N_{UT,b}$) (i.e. the result of the division rounded up to the superior integer),
  ○ Set Ntmp2 as max(Ntmp-$\Delta_{Slot,Max}$,1), which corresponds to the minimum number of time-frequency elements per UT (i.e. the minimum number of subsets each UT will belong to),
  ○ Define a vector U with size (Ntmp2. $N_{UT,b}$) in which each element is a UT index
  ▪ The vector U contains Ntmp2 values "1", followed by then Ntmp2 values "2" until Ntmp2 values "$N_{UT,b}$",
  ○ Set $V_b$ as an empty vector,
  ○ The first element of $V_b$ is 1 (the first element of vector U),
  ○ Set $N_{end}$ so that the last $N_{end}$ elements of $V_{ref}$ have an angle value greater than the last $N_{end}$ elements of U,
  ○ Put the $N_{end}$ last elements of vector U at the end of vector $V_b$.
  ○ Set k equal to 2,
  ○ For each UT j of beam area bref from the second UT to UT $N_{slot}$ - $N_{end}$

    ▪ If angle of UT j of beam area bref is greater than that of UT $U_k$ of beam b, then

    • Element j of vector $V_b$ is $U_k$, and
    • k is incremented

    ▪ otherwise,

    • If the distance between the angle of UT j of the beam area bref and angle of UT $U_k$ of beam area b is greater than the distance between angle of UT j of the beam area bref and the angle of UT $U_{k-1}$ of beam b"

      ○ In case of a full-load approach,

        ▪ Check if an empty element can be added according to the fact that each UT must have at least 1 element, ▪ If so, element j of vector $V_b$ is 0,
        ▪ Otherwise:

          • Element j of vector $V_b$ is $U_k$,
          • k is then incremented,

      ○ otherwise,

        ▪ Check if an element can be added to the previous UT $U_{k-1}$ according to the fact that each UT must have at least 1 element and the fact that maximum difference between number of elements is $\Delta_{Slot,Max}$ -1,
        ▪ If so, element j of vector $V_b$ is $U_{k-1}$,
        ▪ Otherwise,

          • Element j of vector $V_b$ is $U_k$,
          • k is then incremented,

    • Otherwise,

○ Element j of vector $V_b$ is $U_k$,
○ k is then incremented.

Once the vectors $V_b$ have been obtained, the subsets are constructed for the considered time-frequency elements by choosing, for a given subset, a UT of the reference beam area and the UTs of the vectors $V_b$ (if any) which share the same rank within their vector.. In other words, matrix V is made of rows $V_b$ and row $V_{bref}$.

Optionally, the process is repeated a given number of iterations for each of which the reference direction is different from other iterations.

The reference directions (which each define an angle reference) are for instance chosen as a function of the angles of the UTs of the reference beam area (e.g. each UT of the reference beam then defining an angle reference for a given iteration). Alternatively, they are chosen through predetermined reference directions which are chosen independent from the UTs of the reference beam area.

For this iterated configuration, among the different groups of subsets each iteration provides, the chosen group of subsets corresponds to the one which minimizes a chosen association metric G discussed above.

In a second set of embodiments of the first sub-principle the definition of the beam area is not unique.

More specifically, the construction of the precoding subsets includes iterating over a plurality of beam areas respectively chosen as the reference beam area for a given iteration.

The process of constructing the subsets is attached to a given period of time slots.

It comprises a first step of allocating to each UT a number of time-frequency elements of the period, i.e. defining how many subsets each UT will belong to for this period, and a second step of actually constructing the subsets based on the allocation carried out.

In these embodiments, we consider $N_{Packets}$ packets of $L_{Packets}$ time-frequency elements with $N_{Slot} = N_{Packets}$ x $L_{Packets}$ greater or equal to $N_{UT,Max}$ (the highest number of UTs in the considered beam areas). $N_{Slot}$ time-frequency elements form the considered period. The higher $N_{Slot}$, the higher the achievable fairness between the UTs. For instance, $L_{Packets}$ is equal to $N_{UT,Max}$ or $L_{Packets}$ is equal to $N_{Slots}$. (i.e. $N_{Packets}$=1).

Two exemplary allocation methods are described herebelow.

In a first method, the scheduling period is set as $N_{Slot} = N_{Packets}$ x $N_{UT,Max}$.

Then, for each beam area b:

○ $V'_b$ is set as an empty vector,
○ The number of time-frequency elements $N_{Slot,u,b}$ allocated to UT u in beam area b is set to zero
○ The minimum number of time-frequency elements per UT and per packet is set to: $N_{floor,b}$=floor($N_{UT,Max}$ / $N_{UT,b}$) (the result of the division rounded down to the inferior integer);
○ The number of remaining time-frequency elements per packet is set to: $N_{Slot,Rem,b}$ =$N_{UT,Max}$ - $N_{floor,b}$ x $N_{UT,b}$
○ Then, for packet k from 1 to $N_{Packets}$,

    ■ the $N_{Slot,Rem,b}$ remaining time-frequency elements are allocated: $S_{k,b}$ is the set of UTs for which an additional time-frequency element is allocated.
    ■ the maximum number of time-frequency elements per UT is set to: $N_{Slot,max,b} = max_u(N_{slot,u,b})$
    ■ $S_{Max}$ is set as the set of UTs for which $N_{Slot,u,b}$ equals $N_{Slot,max,b}$
    ■ $S_{Max-1}$= {1,2,..., $N_{UT,b}$}- $S_{Max}$ is set as the set of UTs for which $N_{Slot,u,b}$ equals $N_{Slot,max,b}$-1
    ■ If the value card($S_{Max-1}$) is smaller or equal to $N_{Slot,Rem,b}$

        • For each UT u of $S_{Max-1}$, $N_{Slot,u,b}$ is equal to $N_{Slot,u,b}$+1 and $S_{k,b}$ is equal to $S_{Max-1}$
        • $S_{Max,Rand}$ is set as a set of $N_{Slot,Rem,b}$ - card($S_{Max-1}$) randomly chosen UTs in $S_{Max}$, and
        • For each UT u of $S_{Max,Rand}$, $N_{Slot,u,b}$ equals $N_{Slot,u,b}$+1, $S_{k,b}$ equals $S_{k,b}$ U $S_{Max,Rand}$ (i.e. the union thereof)

    ■ otherwise

        • $S_{Max-1,Rand}$ is set as a set of $N_{Slot,Rem,b}$ randomly chosen UTs in $S_{Max-1}$
        • For each UT u of $S_{Max-1,Rand}$, $N_{Slot,u,b}$ equals $N_{Slot,u,b}$+1 and $S_{k,b}$ equals $S_{Max-1,Rand}$,

    ■ $V'_b$ is set as vector $V'_b$ concatenated with $N_{floor,b}$ times the vector [1,2,3,..., $N_{UT,b}$] and one time the vector of elements of $S_{k,b}$

The output of the algorithm is vector $V'_b$ for each beam area b.

In a second method (with identical symbols), the scheduling period set as $N_{Slot}$ (greater or equal to $N_{UT,Max}$) and $N_{Slot}$ equals $N_{Packets}$ x $L_{Packets}$.

Then, for each beam area b:

○ Concatenate ceil($N_{Slot}$ / $N_{UT,b}$) times the vector [1,2,3,..., $N_{UT,b}$] (where ceil is an operator which rounds up to the superior integer),
○ the $N_{Slot}$ first elements are kept and put into $V'_b$,

The output of the algorithm is vector $V'_b$ (made of UT indices) for each beam area b.

The process of constructing one or more subsets from there on can be described as follows, for at least one time-frequency element and for the considered beam areas:

- choosing a set of reference beam areas among the considered beam areas having the considered color,

- for each beam area of the set of reference beam areas:

  - consider said beam area as a temporary reference beam area, and for each beam area of the considered color different from the temporary reference beam area:

    - constructing a distance matrix having elements which are each associated to a UT of the temporary reference beam area and to a UT of the considered beam area and which each correspond to a value of a predetermined distance metric which is a function of at least the respective angular positions of the two considered UTs within the temporary reference beam area, respectively within the considered beam area, and

    - applying an association algorithm through which each of all or part of the UTs of the temporary reference beam area are respectively paired to the UT of the considered beam area so that a first association metric function of the values of the distance metric between paired UTs is minimal,

  - defining a temporary set of precoding subsets each comprising one of the UTs of the temporary reference beam area and all the UTs of the beam areas different from the temporary reference beam area which are paired with said one of the UTs of the reference beam area,

  - for each temporary set of precoding subsets, determining a value of a second association metric defined at least as a function of the angular positions of the UTs of the temporary set of precoding subsets, and

  - selecting precoding subsets of the temporary set of precoding subsets whose value of the association metric is the lowest as the precoding subsets respectively associated to each of said at least one time-frequency element.

The details of a possible algorithm for this construction is as follows:

- for each beam area b, $V'_b$ is reshaped in $N_{Packets}$ vectors of $L_{Packets}$ elements and is put in $V''_{k,b}$ for k from 1 to $N_{Packets}$.

Then:

- a set of reference beam areas is chosen,
- For each packet k from 1 to $N_{Packets}$,

  ○ For each temporary reference beam area btref,

    ▪ For each beam area b, different from temporary reference beam area btref,

      • the distance matrix M of size $L_{Packets}$ x $L_{Packets}$ is constructed based on the vectors $V''_{k,b}$ and $V''_{k,btref}$ with size $L_{Packets}$ which contain the UT indices and therefore indicate the corresponding positions: the element of M in row 1 and column c is the value of the distance metric between UT in position 1 of $V''_{k,b}$ and UT in position c of $V''_{k,btref}$,
      • an association algorithm is implemented (such as a Hungarian or Greedy algorithm) with M as input, so as to find $L_{Packets}$ subsets of 2 UTs, one UT belonging to temporary reference beam area btref and the other UT belonging to beam area b minimizing a chosen metric $G^{(2d)}$ (for the two-dimensional case).

      ▪ $L_{Packets}$ subsets of $N_{Beam}$ UTs from the $N_{Beam}$-1 2-dimensional results are constructed and the corresponding metric G is computed,

    ◦ For packet k, the $L_{Packets}$ subsets corresponding to the temporary reference beam area btref with the minimum metric G are selected

    ◦ Put the $L_{Packets}$ UT precoding subsets in the $N_{Beam}$ vectors $V_b$, with b equal to 1 to $N_{Beam}$, from element with index (k-1) $L_{Packets}$ +1 to element with index $kL_{Packets}$. The vectors $V_b$ form the rows of matrix V.

### Second sub-principle of the first-principle

In the second sub-principle, constructing the subsets does not rely on defining one or more reference beam areas.

A first embodiment of this second sub-principle can be described as follows:
choosing at least one precoding subset comprises, for at least one time-frequency element:

- for each temporary set of precoding subsets among a predetermined ensemble of temporary sets of precoding subsets each comprising one UT of each of the considered beam areas of the considered color, determining a value of an association metric defined as a function of the angular positions of the UTs of the precoding subsets of the temporary set of precoding subsets,

- defining the at least one precoding subset for said at least one time-frequency element as one or more precoding subset comprised in the temporary set of precoding subsets which has the lowest association metric.

In other words, this embodiment revolves around exploring all the possible associations of UTs within temporary sets of precoding subsets, and keeping those which minimize the metric G.

The details of the corresponding algorithm may be as follows:
The scheduling period is set as $N_{Slot}$ greater or equal to $N_{UT,Max}$ to ensure that each UT is served.

- A predetermined number of sets of $N_{Slot}$ subsets of $N_{Beam}$ UTs (including missing UTs in some beam areas in a non-full-load approach) is constructed, the different UTs of a subset belonging to different beam areas of the considered color,
- For each set, the chosen metric G is computed,
- The set of $N_{Slot}$ subsets of $N_{Beam}$ UTs with minimum metric G is selected. The subsets form matrix **V.**

The number of constructed sets may be chosen to account for constraints like serving each UT at least once, to account for a full-load constraint or not, and to account for a fairness constraint or not. In effect, initial constraints such as those are defined, and all the possible sets that match these constraints are built and have their chosen metric G determined.

In another embodiment, constructing the subset can be described as follows, for at least one period comprising a given number of time-frequency elements, greater than or equal to the maximum number of UTs within a beam area among the considered beam areas having the same considered color:

- for each considered beam area:

  - associating a rank with each UT of the beam area as a function of the angular position of said UT relative to a reference angular position within said beam area, said reference angular position being taken identical for each beam area,

  - constructing a vector comprising UTs in descending or ascending order of their rank, each UT appearing a predetermined number of times which is a function of said given number of time-frequency elements and the number of UTs in said beam area, in consecutive positions in the vector,

- defining one or more precoding subset of the period by associating for a given time-frequency element the UTs of the vectors which share a same position within the vectors respectively associated to each beam area.

This approach allows for a maximum fairness between the UTs.

The details of the algorithm may be as follows:
The scheduling period set as $N_{Slot}$ greater or equal to $N_{UT,Max}$ to ensure that each UT is served.

Then:

- For each considered beam area b

  ◦ Construct the UT index vector $V'_b$ such that UT indices are ordered in the ascending/descending order of their respective angle within the beam area (relative to a reference direction passing through the center of the beam area taken identical for all beam areas, as discussed above)
  ◦ Set $N_b$ to zero,
  ◦ Set $V_b$ as an empty vector,
  ◦ For UT u from 1 to $N_{UT,b}$-1,

      ▪ Concatenate to $V_b$ a vector containing round($u.N_{slot}/N_{UT,b}$)-$N_b$ times value u (i.e., allocate round($u.N_{slot}/N_{UT,b}$)-$N_b$ time-frequency elements to UT u)
      ▪ Then set $N_b$ as round($u.N_{slot}/N_{UT,b}$),

  ◦ Concatenate to $V_b$ a vector containing $N_{slot}$- $N_b$ times value $N_{UT,b}$ (i.e., allocate $N_{slot}$ - $N_b$ time-frequency elements to UT $N_{UT,b}$).

The vectors $V_b$ form the rows of matrix **V.**

Optionally, the algorithm is iterated for different reference directions, a chosen association metric G being computed for the result of each iteration, and the result with the lowest value of the metric G is selected to form the precoding subsets.

In another embodiment, choosing at least one precoding subset comprises, for at least one period and for the considered beam area of the considered color:

- implementing a resource allocation algorithm to determine, for each considered beam area having the considered color, a number of precoding subsets each UT of said beam area will belong to for said period,

- in each beam area, associating a rank with each UT of the beam area as a function of at least of the angular position of said UT relative to a reference angular position within said beam area, said reference angular position being taken identical for each beam area,

- for each beam area, constructing a vector comprising UTs in descending or ascending order of their rank, each UT being comprised in said vector a same number of times as the number of times determined for the corresponding UT during said resource allocation algorithm, in consecutive positions in the vector,

- defining one or more precoding subset of the period by associating for a given time-frequency element the UTs of the vectors which share a same position within the vectors respectively associated to each beam area.

This embodiment relies on an initial allocation algorithm such as those described above, which provides vectors $V'_b$ of UT indices for each area b.

The details of a possible algorithm for this embodiment are as follows:

- For each beam area b

  ◦ Reshape $V'_b$ in $N_{Packets}$ vectors of $L_{Packets}$ elements and put $V'_b$ in $V''_{k,b}$ for k from 1 to $N_{Packets}$
  ◦ Set $V_b$ as an empty vector,
  ◦ For each packet k from 1 to $N_{Packets}$,
  ▪ Order UT index elements of $V''_{k,b}$ in the ascending or descending order based on their angle (relative to a reference direction passing through the center of the corresponding beam area) and concatenate the result at the end of $V_b$,

The vectors $V_b$ form the rows of matrix **V.**

Optionally, the algorithm is iterated for different reference directions, a chosen association metric G being computed for each reference angle and each packet k. For each packet k, the $L_{Packets}$ columns of output **V** corresponding to packet *k* are set with the UTs corresponding to the reference angle with lowest metric *G* for packet k.

## Second principle

In the context of the second principle, the UTs of the considered beam areas are divided into groups, as opposed to the first principle in which they are not.

Two sub-principles of this second principle may be implemented.

In the first sub-principle, the groups of UTs are defined as each including the UTs which are located in a given zone of a given beam area which is defined by a partition of the beam area.

The second sub-principles revolves around obtaining groups which comprise a quasi-constant size within the beam area, whereby the different groups comprise respective numbers of UTs which are equal or differ by one across the different groups.

**First sub-principle of the second principle**

In the context of the first sub-principle, dividing the UTs into groups more specifically comprises, for the considered beam areas of the considered color:

- applying a predetermined spatial partition scheme to each beam area to partition said beam area into zones which each cover all or part of an angular portion of the corresponding beam area, whereby each zone has an equivalent zone in every other beam area having the same considered color, two equivalent zones covering same relative portions of their respective beam area relative to a center of the corresponding beam area, and

- within each beam area, defining each group as the UTs which are located in a given zone.

Regarding the spatial partition scheme, several embodiments are possible.

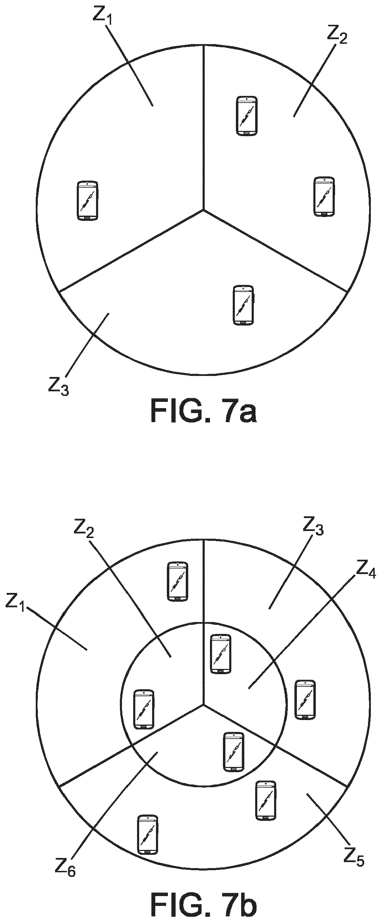

In reference to Figure 7a, the partition scheme divides each beam area into zones which each cover all of respective angular portions of the beam area. In other words, each zone is defined by two reference directions (passing by the center of the beam area) corresponding to angular borders of the zone, and the zone includes all the surface of the beam area between these reference directions. Figure 7a illustrates 3 zones $Z_1$, $Z_2$, $Z_3$ which each cover entire angular portions of the beam area, in the present case angular portions each covering 120°.

In reference to Figure 7b, the partition scheme divides each beam area into zones which only cover part of angular portions of the beam area. In other words, the partition scheme divides the beam area in angle and radius as well. Figure 7b illustrates six zones $Z_1$ to $Z_6$, in which zones $Z_1$ and $Z_2$ each cover part of a same angular portion and together cover the entire angular portion. The same goes for zones $Z_3$ and $Z_4$, and $Z_5$ and $Z_6$.

Between two reference directions, the partition scheme then defines at least two zones, which are located at different respective distances from the center of the beam area.

Regardless of the partition scheme, the same partition scheme is applied to the considered beam areas. By "same partition scheme", it is understood that, given that different beam areas may have different dimensions, the partition scheme accounts for this phenomenon by dividing each beam area into zones which occupy a substantially identical relative surface within their beam area (relative to the entire surface of the considered beam area) as that of corresponding zones in the other beam areas and which are defined by identical reference directions (relative to the center of the beam area).

In other words, each zone has an equivalent zone in other beam areas, two equivalent zones having the same angular configurations relative to the center of their respective beam area, and having respective surfaces relative to the surface of the corresponding beam area which are substantially the same.

Two equivalent zones occupy same relative angular positions (and same relative radial position in the case of the embodiment Figure 6b) within their respective beam area.

Once the partition scheme has been applied, for each beam area, each zone defines a group of UTs which comprises all the UTs located in the considered zone.

In the context of this first sub-principle, constructing precoding subsets may be carried out according to different embodiments.

In a first embodiment, choosing at least one precoding subset comprises forming at least one precoding subset by selecting one UT belonging to a given group and randomly or arbitrarily selecting, for every other considered beam area of the considered color, one UT from the group of said beam area which is associated to the zone of said beam area which is equivalent to the zone associated to the group of the so-selected UT.

In other words, once the groups have been formed, at least one subset is constructed by choosing one UT in a given group and associating to the chosen UT a UT of each equivalent zone in the other beam areas in a random or arbitrary manner.

The UTs of already constructed subsets are not considered anymore for constructing further subsets. The random or arbitrary allocation goes on until all UTs belong to a precoding subset.

In another embodiment, constructing at least one subset comprises, after having obtained per-zone groups:

- defining a period as comprising a number of time-frequency elements equal to or greater than the sum over the zones of one considered beam area having the considered color of the highest numbers of UTs a group which is associated to the considered zone or to an equivalent zone comprises among all beam areas having the same considered color,

- for each group, choosing how many different precoding subsets of said period each UT of said group will form part of so that each UT belongs to at least one precoding subset,

- for each time-frequency element of said period, forming the corresponding precoding subset by selecting one UT belonging to a given group of a given beam area and randomly or arbitrarily selecting, for every other considered beam area of the considered color, one UT from the group of said beam area which is associated to the zone of said beam area which is equivalent to the zone associated to the group of the so-selected UT, so that over said period, each UT belongs to as many precoding subsets as previously chosen.

In effect, this embodiment aims at obtaining subsets which comply with a full-load approach.

## Second sub-principle of the second principle

In the context of the second sub-principle, the groups are built so as to present a quasi-constant size within every considered beam area of the considered color.

Different approaches may be used to construct such groups.

In a first approach, dividing the UTs into groups comprises, for each considered beam area:

- applying a predetermined spatial partition scheme to each beam area to partition said beam area into zones which each cover all or part of an angular portion of the corresponding beam area, whereby each zone has an equivalent zone in every other beam area of the same considered color, two equivalent zones covering same portions of their respective beam area relative to a center of the corresponding beam area, and

- for each beam area, defining each of a plurality of temporary groups as each including the UTs which are located in a given zone,

- for each considered beam area, until all the temporary groups have respective numbers of UTs which differ from 1 or less, reallocating to the temporary group having the lowest number of UTs one UT from the temporary group which, among the UTs in temporary groups having a number of UTs greater than a predetermined number, is the closest to the zone of said temporary group having the lowest number of UTs,

- defining the groups as the temporary groups obtained when all the temporary groups have respective numbers of UTs which differ from one or less, each group being associated to the same zone as that of the corresponding temporary group.

This approach relies on an initial per-zone group construction, the groups then being further modified to obtain quasi-constant size groups.

In this context, each group is still associated to a given zone which corresponds to the zone its temporary per-zone group was associated to, but may comprise UTs located in other zones.

In a second approach, the groups are constructed through an association algorithm, wherein dividing the UTs into groups comprises:

- applying a predetermined spatial partition scheme to each considered beam area to partition said beam area into zones which each cover all or part of an angular portion of the corresponding beam area, whereby each zone has an equivalent zone in every other considered beam area of the same considered color, two equivalent zones covering same portions of their respective beam area relative to a center of the corresponding beam area,

- for each beam area, constructing a distance matrix having elements which each correspond to a value of a distance between a UT of the beam area and a zone of said beam area,

- for each beam area, implementing an association algorithm having a plurality of iterations during each of which, each zone is associated to a UT so that the sum of distances between associated UTs and zones is minimal and the corresponding elements in the distance matrix are modified to prevent the corresponding UT to be associated to another zone in a further iteration, said association algorithm ending when all the UTs have been associated to a zone,

each group of each beam area being defined as the UTs which have been associated to a same zone within a given beam area through the association algorithm.

In effect, the details of a possible algorithm for this embodiment are as follows:

- For each considered beam area b:

  ◦ Construct the distance matrix M of size $N_{UT,b}$ x $N_{Group}$ ($N_{Group}$ is the number of groups per beam area, which is equal to the beam area's number of zones) whose elements each correspond to a distance between a UT of the beam area and a zone of the beam area,
  ◦ Set $N_{It,b}$ as equal to ceil($N_{UT,b}$ / $N_{Group}$) (the result of the division rounded up to the superior integer)
  ◦ For iteration 1 to $N_{It,b}$,

    ▪ Apply a 2-dimensional association algorithm between UTs and zones so as to find a maximum of $N_{Group}$ subsets of one UT and one zone minimizing the sum of corresponding elements of the distance matrix M.
    ▪ Set Infinity values for lines of the distance matrix M corresponding to the $N_{Group}$ chosen UTs.

The distance from a given UT to a zone for instance corresponds to the distance between the UT and the zone. This distance may for instance be defined as the distance between the UT and the center of the zone, or the distance between the UT and a border of the zone.

Through this process, a group is still associated to a zone which has equivalent zones in the other considered beam areas of the considered color.

From there on, in the context of the second sub-principle, several embodiments to construct the subsets may be implemented.

In a given embodiment, this construction is carried out similar to the first embodiment of the first sub-principle of the second principle.

In other words, choosing at least one precoding subset comprises forming at least one precoding subset by selecting one UT belonging to a given group and randomly or arbitrarily selecting, for every other considered beam area of the considered color, one UT from the group of said beam area which is associated to the zone of said beam area which is equivalent to the zone associated to the group of the so-selected UT.

In another embodiment, constructing one or more subsets comprises:

- defining at least one period comprising a number of time slots equal to or greater than the sum over the zones of one beam area having a given considered color of the highest numbers of UTs a group which is associated to the considered zone or to an equivalent zone in the considered beam areas comprises among all considered beam areas having the same considered color,

- for each group, choosing how many different precoding subsets of at least one period each UT of said group will form part of so that each UT belongs to at least one precoding subset, the choice being further made as a function of said fairness criterion,

- for each time-frequency element of said at least one period, forming the corresponding precoding subset by selecting one UT belonging to a given group and randomly or arbitrarily selecting, for every other beam area of the same considered color, one UT from the group of said beam area which is associated to the zone of said beam area which is equivalent to the zone associated to the group of the so-selected UT, so that over said period, each UT belongs to as many precoding subsets as previously chosen.

The choice of the number of subsets each is for instance implemented through a resource allocation algorithm such as one of two described above.

For instance, this allocation algorithm including a fairness constraint is implemented for each group, and for each group, for each beam area.

The subsets are constructed by selecting one UT of a the considered beam area and randomly or arbitrarily associating this UT to one UT of each group itself associated to an equivalent zone of the zone of this initially selected UT. The UTs of already constructed subsets are not considered anymore for constructing further subsets. The random or arbitrary allocation goes on until all UTs belong to a precoding subset.

Once the precoding subsets have been constructed, during step S3 of the method according to the invention, one or more signals are generated based on the precoding subsets.

In descending configuration (wherein the groups of antennas generate beams), for each of the considered time-frequency elements, for the set of groups of antennas having the considered color associated to the considered subset, a signal is generated for each group of antennas based on which said group of antennas is to generate its beam.

The signal is constructed as a function of the data which are respectively destined to all the UTs of the considered subset.

It should be noted that for a given time-frequency element, two generated signals respectively associated to two such groups of antennas may depend on these data in respective manner which are not identical.

In other words, for an exemplary linear configuration, the signal conveyed through the beam generated by a first group of antennas will be representative of a first linear combination of the data respectively destined to the UTs of the subset, and the signal conveyed through the beam generated by a second group of antennas will be representative of a second linear combination of the data respectively destined to the UTs of the subset.

In ascending configuration (wherein the groups of antennas receive signals from the UTs), the same process is observed except that each group of antennas operates as a receiver which receives signals emanating from the different UTs of the subset which are representative of the data which emanate from the UTs. Each group thus generates a given signal which will depend on the signals coming from the UTs of the subset.

Once more, two signals respectively generated by two groups of antennas for a given subset (and a given time-frequency element) generally depend on the respective data coming from the UTs of the subset in a different manner.

In this ascending configuration, advantageously, these different signals are processed together, for instance through a form of combination, to improve the reconstruction of the data coming from the UTs based on the signals representative thereof which are actually received by the apparatus.

The processing of the signals from different groups of antennas to reconstruct the data coming from two UTs generally depends on the respective signals received from the UTs in a different manner.

The above description has been given in a configuration in which the apparatus is a multi-beam satellite comprising antennas arranged in groups, the method according to the invention being adapted for a descending configuration in which the antennas generate beams towards the UT, and an ascending configuration in which the UT send data to the satellite.

However, in other embodiments, the apparatus comprises a plurality of base stations located on the surface of the Earth, each base station comprising one or more antennas arranged in one or more groups of antennas each defining a beam area.

In these embodiments, the beam area is also known as a cell. The ascending configuration in these embodiments is referred to as uplink and the descending configuration is referred to as downlink. In satellite configuration, the ascending configuration is also referred to as uplink or return link and the descending configuration is also referred to as downlink or forward link.

The earth station is then a piece of equipment of a network the base stations belong to, such as a gateway.

In general, the above embodiments may be combined together. For instance, a first embodiment is implemented to construct precoding subsets for a given number of time slots, a different embodiment is implemented for a subsequent number of time slots, and so on. The subset of a given time-frequency element is then constructed based on the principle of one of the embodiments described above.

The invention has numerous advantages. First of all, it prevents undesirable situations in which UTs belonging to different beam areas but which are close to each other are precoded together, thereby improving the cell-edge performance, which designates the performances of the UTs with the worst performance. This is obtained while keeping good cell-center performances (around the center of the beam areas).

In addition, it is specifically designed so as to be straightforward and light in terms of complexity, which is important given the number of UTs per beam area can be very high.

**Claims**

1. A method of exchanging data involving at least one apparatus (APP) and user terminals, or UTs, said apparatus and the UTs being adapted to exchange data using electromagnetic waves for conveying said data, the apparatus comprising a plurality of groups of at least one antenna ($GANT_1$, ..., $GANT_n$) each group at least one antenna being adapted for emitting a beam of electromagnetic waves for sending said data to the UTs and to receive from the UTs signals representative of the data, each beam adapted to be emitted by the apparatus defining a beam area (BA) in which UTs may be located, each group of at least one antenna being associated with time-frequency resources adapted to be used by said group of at least one antenna to generate the corresponding beam, respectively to receive a signal from at least one UT located in the corresponding beam area, said time-frequency resources being divided into time-frequency elements which each correspond to a given time slot and, for said time slot, to a given frequency sub-band, the method comprising:

- receiving (S1) measurements data from the UTs, said measurements data comprising position data representative at least of an angular position of the corresponding UT within the corresponding beam area,
- for at least one time-frequency element, choosing (S2) at least one precoding subset respectively associated to one of the at least one time frequency element, each precoding subset being associated to all the groups of antennas respectively associated to a given beam area among one or more considered beam areas having a considered color, whereby two beam areas have the same color when the corresponding beams share a same polarization configuration and a common frequency range, each precoding subset comprising at most one UT from each of the considered beam areas, each precoding subset of the at least one precoding subset being chosen by selecting one or more UT each located in a different beam area among the considered beam areas as a function of at least respective angular positions of the UTs within the corresponding beam area and determined based on the position data sent by the UTs,
- generating (S3) at least one signal constructed as a function of the data destined to the UTs of the precoding subset or coming from the UTs of the precoding subset to transfer said data to the UTs or receive said data from the UTs using all or part of the groups of antennas associated to said at least one precoding subset,

wherein the time-frequency resources are divided into periods each comprising a plurality of time slots, and wherein choosing at least one precoding subset comprises, for at least one period:

- implementing a resource allocation algorithm to determine, for each considered beam area, a number of precoding subsets each UT of said beam area will belong to for said period,
- in each beam area, associating a rank with each UT of the beam area as a function of at least the angular position of said UT relative to a reference angular position within said beam area, said reference angular position being taken identical for each beam area,
- for each beam area, constructing a vector comprising UTs in descending or ascending order of their rank, each UT being comprised in said vector a same number of times as the number of times determined for the corresponding UT during said resource allocation algorithm, in consecutive positions in the vector,

- defining one or more precoding subset of the period by associating for a given time-frequency element the UTs of the vectors which share a same position within the vectors respectively associated to each beam area.

2. The method according to claim 1, wherein choosing at least one precoding subset comprises, for at least one period, selecting the one or more UT of at least one precoding subset so that the time-frequency resources of at least one group of antennas for at least one time-frequency element of said period are not used to generate a beam or receive a signal from at least one UT.

3. The method according to claim 1 or 2, wherein choosing at least one precoding subset comprises, for at least one period, defining the precoding subsets for the time-frequency elements of said period also as a function of a load constraint, whereby the time-frequency resources of said period are all used to generate a beam or receive signals from UTs.

4. The method according to claim 3, wherein at least one UT of the precoding subsets of said period is also selected to form part of one or more precoding subset also as a function of a fairness criterion, whereby said at least one UT is selected as a function of the precoding subsets of at least one previous time slot and/or one following time slot so that for at least one beam area, the UTs of said beam area each belong to a same number of precoding subsets over a predetermined number of time slots.

5. The method according to any one of the preceding claims, wherein choosing at least one precoding subset comprises determining at least one reference beam area among the considered beam areas (BA).

6. The method according to claim 5, wherein said reference beam is determined as corresponding to the beam area (BA) which comprises the highest number of UTs among the considered beam areas.

7. The method according to claim 6, wherein choosing at least one precoding subset further comprises:

- for each beam area different from the reference beam area among the considered beam areas:

- constructing a distance matrix having elements which are each associated to a UT of the reference beam area and to a UT of the beam area and which each correspond to a value of a predetermined distance metric which is a function at least of the respective angular positions of the two considered UTs within the reference beam area, respectively within the beam area, and
- applying an association algorithm through which each of the UTs of the reference beam area is respectively paired to at most one UT of the beam area so that an association metric function of the values of the distance metric between paired UTs is minimal,

- defining one or more precoding subset as each comprising one of the UTs of the reference beam area and all the UTs of the beam areas different from the reference beam area among the considered beam areas which are paired with said UT of the reference beam area.

**8.** The method according to claim 6, wherein choosing at least one precoding subset further comprises:

- for each beam area different from the reference beam area among the considered beam areas:

- constructing a distance matrix having elements which are each associated to a UT of the reference beam area and to a UT of the beam area and which each correspond to a value of a predetermined distance metric which is a function at least of the respective angular positions of the two considered UTs within the reference beam area, respectively within the beam area, and
- applying an association algorithm through which each of the UTs of the reference beam area is respectively paired to the UT of the considered beam area corresponding to the value of the predetermined distance metric which is minimal within the distance matrix, whereby each UT of the beam area is paired to a chosen number of UTs from the reference beam area,

- defining one or more precoding subset as each comprising one of the UTs of the reference beam area and all the UTs of the beam areas different from the reference beam area among the considered beam areas which are paired with said UT of the reference beam area.

**9.** The method according to claim 6, wherein choosing at least one precoding subset further comprises:

- for the reference beam area and each beam area different from the reference beam among the considered beam areas, associating to the UTs at least one rank within the corresponding beam area, said rank being defined as a function of the angular position of the considered UT within the considered beam area relative to a reference angular position within said beam area, said reference angular position being taken identical for each beam area,
- defining one or more precoding subset as each comprising the UTs which share a same rank within their respective beam area.

**10.** The method according to claim 5, wherein choosing at least one precoding subset comprises, for at least one time-frequency element of said at least one time-frequency element:

- choosing a set of reference beam areas among the considered beam areas,
- for each beam area of the set of reference beam areas:

- considering said beam area as a temporary reference beam area, and for each beam area different from the temporary reference beam area among the considered beam areas:

- constructing a distance matrix having elements which are each associated to a UT of the temporary reference beam area and to a UT of the beam area and which each correspond to a value of a predetermined distance metric which is a function of at least the respective angular positions of the UT of the temporary reference beam area and of the UT of the beam area within the temporary reference beam area, respectively within the beam area, and
- applying an association algorithm through which each of all or part of the UTs of the temporary reference beam area are respectively paired to the UT of the considered beam area so that a first association metric function of the value of the distance metric between paired UTs is minimal,

- defining a temporary set of precoding subsets each comprising one of the UTs of the temporary reference beam area and all the UTs of the beam areas different from the temporary reference beam area which are paired with said one of the UTs of the reference beam area,

- for each temporary set of precoding subsets, determining a value of a second association metric defined at least as a function of the angular positions of the UTs of the temporary set of precoding subsets, and
- selecting each precoding subset of the temporary set of precoding subsets whose value of the second association metric is the lowest as the precoding subsets respectively associated to each of said at least one time-frequency element.

**11.** The method according to claim 1, wherein choosing at least one precoding subset comprises, for at least one time-frequency element of said at least one time-frequency element:

- for each temporary set of precoding subsets among a predetermined ensemble of temporary sets of precoding subsets each comprising one UT of each of the considered beam areas of the considered color, determining a value of an association metric defined as a function of the angular positions of the UTs of the precoding subsets of the temporary set of precoding subsets,
- defining the at least one precoding subset for said at least one time-frequency element as one or more precoding subset comprised in the temporary set of precoding subsets which has the lowest association metric.

**12.** The method according to claim 1, wherein choosing at least one precoding subset comprises, for at least one period comprising a given number of time-frequency elements, greater than or equal to the maximum number of UTs within a beam area among the considered beam areas:

- for each beam area among the considered beam areas:

  - associating a rank with each UT of the beam area as a function of the angular position of said UT relative to a reference angular position within said beam area, said reference angular position being taken identical for each beam area,
  - constructing a vector comprising UTs in descending or ascending order of their rank, each UT appearing a predetermined number of times which is a function of said given number of time-frequency elements in the period and the number of UTs in said beam area, in consecutive positions in the vector,

- defining one or more precoding subset of the period by associating for a given time-frequency element the UTs of the vectors which share a same position within the vectors respectively associated to each beam area.

**13.** The method according to claim 1, wherein choosing at least one precoding subset comprises dividing the UTs of each considered beam area into a plurality of groups each comprising one or more UTs.

**14.** The method according to claim 13, wherein dividing the UTs of each beam into groups comprises:

- applying a predetermined spatial partition scheme to each beam area to partition said beam area into zones which each cover all or part of an angular portion of the corresponding beam area, whereby each zone has an equivalent zone in every other beam area having the same considered color, two equivalent zones covering same relative portions of their respective beam area relative to a center of the corresponding beam area, and
- within each beam area, defining each group as the UTs which are located in a given zone.

**15.** The method according to claim 14, further comprising:

- defining a period as comprising a number of time-frequency elements equal to or greater than the sum over the zones of one considered beam area of the highest numbers of UTs a group which is associated to the considered zone or to an equivalent zone comprises among all considered beam areas,
- for each group, choosing how many different precoding subsets of said period each UT of said group will form part of so that each UT belongs to at least one precoding subset,
- for each time-frequency element of said period, forming the corresponding precoding subset by selecting one UT belonging to a given group of a given beam area and randomly or arbitrarily selecting, for every other considered beam area, one UT from the group of the beam area which is associated to the zone of said beam area which is equivalent to the zone associated to the group of the so-selected UT, so that over said period, each UT belongs to as many precoding subsets as previously chosen.

**16.** The method according to claim 13, wherein the groups have a quasi-constant size, whereby, within each beam area, the respective numbers of UTs the groups comprise are equal or differ by one.

**17.** The method according to claim 16, wherein dividing the UTs into groups comprises :

- applying a predetermined spatial partition scheme to each beam area to partition said beam area into zones ($Z_1$, ..., $Z_6$) which each cover all or part of an angular portion of the corresponding beam area, whereby each zone has an equivalent zone in every other considered beam area, two equivalent zones covering same relative portions of their respective beam area relative to a center of the corresponding beam area, and
- for each beam area, defining each of a plurality of temporary groups as each including the UTs which are located in a given zone,
- for each beam area, until all the temporary groups have respective numbers of UTs which are equal or differ by one, reallocating to the temporary group having the lowest number of UTs one UT from the temporary group which, among the UTs in temporary groups having a number of UTs greater than a predetermined number, is the closest to the zone of said temporary group having the lowest number of UTs,
- defining the groups as the temporary groups obtained when all the temporary groups have respective numbers of UTs which are equal or differ by one, each group being associated to the same zone as that of the corresponding temporary group.

**18.** The method according to claim 16, wherein dividing the UTs into groups comprises:

- applying a predetermined spatial partition scheme to each considered beam area to partition said beam area into zones which each cover all or part of an angular portion of the corresponding beam area, whereby each zone has an equivalent zone in every other considered beam area, two equivalent zones covering same relative portions of their respective beam area relative to a center of the corresponding beam area,
- for each beam area to which the spatial partition scheme was applied :

  - constructing a distance matrix having elements which each correspond to a value of a distance between a UT of the beam area and a zone of said beam area, and
  - implementing an association algorithm having at least one iteration during each of which each zone is associated to a UT so that the sum of distances between associated UTs and zones is minimal and the corresponding elements in the distance matrix are modified to prevent the corresponding UT to be associated to another zone in a further iteration, said association algorithm ending when all the UTs have been associated to a zone,

the method further comprising defining each group of each beam area as the UTs which have been associated to a same zone within said beam area through said association algorithm.

**19.** The method according to any one of claims 14, 16, 17 or 18, wherein choosing at least one precoding subset further comprises forming at least one precoding subset by selecting one UT belonging to a given group and randomly or arbitrarily selecting, for every other considered beam area, one UT from the group of said beam area which is associated to the zone of said beam area which is equivalent to the zone associated to the group of the so-selected UT.

**20.** The method according to claim 4 and any one of claims 16 to 18, further comprising:

- defining at least one period comprising a number of time slots equal to or greater than the sum over the zones of one beam area among the considered beam areas of the highest numbers of UTs a group which is associated to the considered zone or to an equivalent zone comprises among all considered beam areas,
- for each group, choosing how many different precoding subsets of at least one period of said plurality of periods each UT of said group will form part of so that each UT belongs to at least one precoding subset, the choice being further made as a function of said fairness criterion,
- for each time-frequency element of said at least one period, forming the corresponding precoding subset by selecting one UT belonging to a given group and randomly or arbitrarily choosing, for every other considered beam area, one UT from the group of said beam area which is associated to the zone of said beam area which is equivalent to the zone associated to the group of said UT belonging to a given group, so that over said period, each UT belongs to as many precoding subsets as previously chosen.

**21.** The method according to any one of the preceding claims, wherein for at least one precoding subset, the time-frequency resources are used by all or part of the groups of antennas associated to said subset to generate a beam intended for the UT of said precoding subset located within the corresponding beam area, and wherein generating at least one signal comprises generating, for each group of antennas of said all or part of the groups of antennas associated to said subset, a signal destined to be used by said group of antennas to generate the corresponding beam, said signal being generated as a function of the data destined to all the UTs belonging to said precoding subsets.

**22.** The method according to any one of the preceding claims, wherein the apparatus comprises a satellite having said plurality of antennas.

**23.** The method according to any one of the claims 1 to 21, wherein the apparatus comprises a plurality of base stations located on the surface of the Earth, each base station comprising one or more antennas arranged in one or more groups of antennas.

**24.** A computer program comprising instructions for the implementation of the method according to any one of the preceding claims when the computer program is executed by a processor.

**Patentansprüche**

**1.** Verfahren zum Austausch von Daten, welches wenigstens eine Vorrichtung (APP - apparatus) und Benutzerendgeräte, oder UTs (Benutzerendgeräte - user terminals), involviert, wobei die Vorrichtung und die UTs dazu eingerichtet sind, Daten unter Verwendung elektromagnetischer Wellen zum Transportieren der Daten auszutauschen, wobei die Vorrichtung eine Mehrzahl von Gruppen wenigstens einer Antenne ($GANT_1$, ..., $GANT_n$) umfasst, wobei jede Gruppe wenigstens einer Antenne dazu eingerichtet ist, einen Strahl elektromagnetischer Wellen zum Senden der Daten an die UTs zu emittieren und von den UTs Signale zu empfangen, welche für die Daten repräsentativ sind, wobei jeder Strahl dazu eingerichtet ist, von der Vorrichtung emittiert zu werden, welche einen Strahlbereich (BA - beam area) definiert, in welchem UTs lokalisiert sein können, wobei jede Gruppe wenigstens einer Antenne Zeitfrequenzressourcen zugeordnet ist, welche dazu eingerichtet sind, von der Gruppe wenigstens einer Antenne verwendet zu werden, um den entsprechenden Strahl zu erzeugen, jeweils um ein Signal von wenigstens einem UT zu empfangen, welches in dem entsprechenden Strahlbereich lokalisiert ist, wobei die Zeitfrequenzressourcen in Zeitfrequenzelemente unterteilt sind, welche jeweils einem gegebenen Zeitfenster und für dieses Zeitfenster einem gegebenen Frequenzteilband entsprechen, wobei das Verfahren umfasst:

- Empfangen (S1) von Messdaten von den UTs, wobei die Messdaten Positionsdaten umfassen, welche wenigstens für eine Winkelposition des entsprechenden UT innerhalb des entsprechenden Strahlbereichs repräsentativ sind,
- für wenigstens ein Zeitfrequenzelement, Auswählen (S2) wenigstens eines Vorcodierungsteilsatzes, welcher jeweils einem des wenigstens einen Zeitfrequenzelements zugeordnet ist, wobei jeder Vorcodierungsteilsatz all den Gruppen von Antennen zugeordnet ist, welche jeweils einem gegebenen Stahlbereich unter einem oder mehreren betrachteten Strahlbereichen mit einer betrachteten Farbe zugeordnet sind, wobei zwei Strahlbereiche die gleiche Farbe aufweisen, wenn die entsprechenden Strahlen eine gleiche Polarisationskonfiguration und einen gemeinsamen Frequenzbereich teilen, wobei jeder Vorcodierungsteilsatz höchstens ein UT von jedem der betrachteten Strahlbereiche umfasst, wobei jeder Vorcodierungsteilsatz des wenigstens einen Vorcodierungsteilsatzes ausgewählt wird, indem ein oder mehrere UTs selektiert werden, welche jeweils in einem unterschiedlichen Strahlbereich unter den betrachteten Strahlbereichen als eine Funktion wenigstens jeweiliger Winkelpositionen der UTs innerhalb des entsprechenden Strahlbereichs lokalisiert werden und basierend auf den von den UTs gesendeten Positionsdaten ermittelt werden,
- Erzeugen (S3) wenigstens eines Signals, welches als eine Funktion der Daten erstellt ist, welche für die UTs des Vorcodierungsteilsatzes vorgesehen ist oder von den UTs des Vorcodierungsteilsatzes kommt, um die Daten an die UTs zu übertragen oder die Daten von den UTs zu empfangen, unter Verwendung aller oder eines Teils der Gruppen von Antennen, welche dem wenigstens einen Vorcodierungsteilsatz zugeordnet sind,

wobei die Zeit-Frequenz-Ressourcen in Perioden unterteilt werden, welche jeweils eine Mehrzahl von Zeitfenstern umfassen, und
wobei das Auswählen wenigstens eines Vorcodierungsteilsatzes für wenigstens eine Periode umfasst:

- Implementieren eines Ressourcenzuteilungsalgorithmus, um für jeden betrachteten Strahlbereich eine Anzahl von Vorcodierungsteilsätzen zu bestimmen, welchen jedes UT des Strahlbereichs für die Periode angehören wird,

- in jedem Strahlbereich, Zuordnen eines Rangs jedem UT des Strahlbereichs als eine Funktion wenigstens der Winkelposition des UT bezüglich einer Referenzwinkelposition innerhalb des Strahlbereichs, wobei die Referenzwinkelposition für jeden Strahlbereich identisch gewählt wird,

- für jeden Strahlbereich, Erstellen eines Vektors, welcher UTs in einer absteigenden oder einer aufsteigenden Reihenfolge ihres Rangs umfasst, wobei jedes UT in dem Vektor eine gleiche Anzahl von Malen umfasst ist, wie die Anzahl von Malen, welche für das entsprechende UT während des Ressourcenzuteilungsalgorithmus bestimmt wird, in aufeinanderfolgenden Positionen in dem Vektor,

- Definieren eines oder mehrerer Vorcodierungsteilsätzen der Periode durch Zuordnen für ein gegebenes Zeitfrequenzelement der UTs des Vektors, welche eine gleiche Position innerhalb der Vektoren teilen, welche jeweils jedem Strahlbereich zugeordnet sind.

2. Verfahren nach Anspruch 1, wobei das Auswählen wenigstens eines Vorcodierungsteilsatzes für wenigstens eine Periode ein Selektieren des einen oder der mehreren UTs aus wenigstens einem Vorcodierungsteilsatz umfasst, so dass die Zeitfrequenzressourcen wenigstens einer Gruppe von Antennen für wenigstens ein Zeitfrequenzelement der Periode nicht verwendet werden, um einen Strahl zu erzeugen oder ein Signal von wenigstens einem UT zu empfangen.

3. Verfahren nach Anspruch 1 oder 2, wobei das Auswählen wenigstens eines Vorcodierungsteilsatzes für wenigstens eine Periode ein Definieren der Vorcodierungsteilsätze für die Zeitfrequenzelemente der Periode auch als eine Funktion einer Lastbedingung umfasst, wobei die Zeitfrequenzressourcen der Periode alle verwendet werden, um einen Strahl zu erzeugen oder Signale von UTs zu empfangen.

4. Verfahren nach Anspruch 3, wobei wenigstens ein UT der Vorcodierungsteilsätze der Periode auch selektiert wird, um einen Teil eines oder mehrerer Vorcodierungsteilsätze auch als eine Funktion eines Fairnesskriteriums zu bilden, wobei das wenigstens eine UT als eine Funktion der Vorcodierungsteilsätze wenigstens eines vorherigen Zeitfensters und/oder eines folgenden Zeitfensters selektiert wird, so dass für wenigstens einen Strahlbereich die UTs des Strahlbereichs jeweils einer gleichen Anzahl von Vorcodierungsteilsätzen über eine vorbestimmte Anzahl von Zeitfenstern angehören.

5. Verfahren nach einem der vorhergehenden Ansprüche, wobei das Auswählen wenigstens eines Vorcodierungsteilsatzes ein Bestimmen wenigstens eines Referenzstrahlbereichs unter den betrachteten Strahlbereichen (BA - beam areas) umfasst.

6. Verfahren nach Anspruch 5, wobei der Referenzstrahl als dem Strahlbereich (BA - beam area) entsprechend bestimmt wird, welcher unter den betrachteten Strahlbereichen die höchste Anzahl von UTs umfasst.

7. Verfahren nach Anspruch 6, wobei das Auswählen wenigstens eines Vorcodierungsteilsatzes ferner umfasst:

- für jeden Strahlbereich, welcher sich von dem Referenzstrahlbereich unterscheidet, unter den betrachteten Strahlbereichen:

- Erstellen einer Distanzmatrix mit Elementen, welche jeweils einem UT des Referenzstrahlbereichs und einem UT des Strahlbereichs zugeordnet sind und welche jeweils einem Wert einer vorbestimmten Distanzmetrik entsprechen, welche eine Funktion wenigstens der jeweiligen Winkelpositionen der zwei betrachteten UTs innerhalb des Referenzstrahlbereichs ist, jeweils innerhalb des Strahlbereichs, und
- Anwenden eines Zuordnungsalgorithmus, durch welchen jedes der UTs des Referenzstrahlbereichs jeweils mit höchstens einem UT des Strahlbereichs gepaart wird, so dass eine Zuordnungsmetrikfunktion der Werte der Distanzmetrik zwischen gepaarten UTs minimal wird,

- Definieren eines oder mehrerer Vorcodierungsteilsätze als jeweils umfassend eines der UTs des Referenzstrahlbereichs und alle der UTs der Strahlbereiche, welche sich von dem Referenzstrahlbereich unterscheiden, unter den betrachteten Strahlbereichen, welche mit dem UT des Referenzstrahlbereichs gepaart sind.

8. Verfahren nach Anspruch 6, wobei das Auswählen wenigstens eines Vorcodierungsteilsatzes ferner umfasst:

- für jeden Strahlbereich, welcher sich von dem Referenzstrahlbereich unterscheidet, unter den betrachteten Strahlbereichen:

- Erstellen einer Distanzmatrix mit Elementen, welche jeweils einem UT des Referenzstrahlbereichs und einem UT des Strahlbereichs zugeordnet sind und welche jeweils einem Wert einer vorbestimmten Distanzmetrik entsprechen, welche eine Funktion wenigstens der jeweiligen Winkelpositionen der zwei betrachteten UTs innerhalb des Referenzstrahlbereichs ist, jeweils innerhalb des Strahlbereichs, und
- Anwenden eines Zuordnungsalgorithmus, durch welchen jedes der UTs des Referenzstrahlbereichs jeweils mit dem UT des betrachteten Strahlbereichs gepaart wird, entsprechend dem Wert der vorbestimmten Distanzmetrik, welcher innerhalb der Distanzmatrix minimal wird, wobei jedes UT des Strahlbereichs mit einer ausgewählten Anzahl von UTs aus dem Referenzstrahlbereich gepaart wird,

- Definieren eines oder mehrerer Vorcodierungsteilsätze als jeweils umfassend eines der UTs des Referenzstrahlbereichs und alle der UTs der Strahlbereiche, welche sich von dem Referenzstrahlbereich unterscheiden, unter den betrachteten Strahlbereichen, welche mit dem UT des Referenzstrahlbereichs gepaart sind.

9. Verfahren nach Anspruch 6, wobei das Auswählen wenigstens eines Vorcodierungsteilsatzes ferner umfasst:

- für den Referenzstrahlbereich und jeden Strahlbereich, welcher sich von dem Referenzstrahl unterscheidet, unter den betrachteten Strahlbereichen, Zuordnen den UTs wenigstens einen Rang innerhalb des entsprechenden Strahlbereichs, wobei der Rang als eine Funktion der Winkelposition des betrachteten UT innerhalb des betrachteten Strahlbereichs bezüglich einer Referenzwinkelposition innerhalb des Strahlbereichs definiert ist, wobei die Referenzwinkelposition für jeden Strahlbereich identisch gewählt wird,
- Definieren eines oder mehrerer Vorcodierungsteilsätze als jeweils umfassend die UTs, welche einen gemeinsamen Rang innerhalb ihres jeweiligen Strahlbereichs teilen.

10. Verfahren nach Anspruch 5, wobei das Auswählen wenigstens eines Vorcodierungsteilsatzes für wenigstens ein Zeitfrequenzelement des wenigstens einen Zeitfrequenzelements umfasst:

- Auswählen eines Satzes von Referenzstrahlbereichen unter den betrachteten Strahlbereichen,
- für jeden Strahlbereich des Satzes von Referenzstrahlbereichen:

- Betrachten des Strahlbereichs als einen temporären Referenzstrahlbereich und, für jeden Strahlbereich, welcher sich von dem temporären Referenzstrahlbereich unterscheidet, unter den betrachteten Strahlbereichen:

- Erstellen einer Distanzmatrix mit Elementen, welche jeweils einem UT des temporären Referenzstrahlbereichs und einem UT des Strahlbereichs zugeordnet sind und welche jeweils einem Wert einer vorbestimmten Distanzmetrik entsprechen, welche eine Funktion wenigstens der jeweiligen Winkelpositionen des UT des temporären Referenzstrahlbereichs und des UT des Strahlbereichs innerhalb des temporären Referenzstrahlbereichs ist, jeweils innerhalb des Strahlbereichs, und

- Anwenden eines Zuordnungsalgorithmus, durch welchen jedes aller oder eines Teils der UTs des temporären Referenzstrahlbereichs jeweils mit dem UT des betrachteten Strahlbereichs gepaart wird, so dass eine erste Zuordnungsmetrikfunktion des Werts der Distanzmetrik zwischen gepaarten UTs minimal wird,

- Definieren eines temporären Satzes von Vorcodierungsteilsätzen, welche jeweils eines der UTs des temporären Referenzstrahlbereichs und all die UTs der Strahlbereiche, welche sich von dem temporären Referenzstrahlbereich unterscheiden, umfassen, welche mit dem einen der UTs des Referenzstrahlbereichs gepaart werden,

- für jeden temporären Satz von Vorcodierungsteilsätzen, Bestimmen eines Werts einer zweiten Zuordnungsmetrik, welche wenigstens als eine Funktion der Winkelpositionen der UTs des temporären Satzes von Vorcodierungsteilsätzen definiert ist, und
- Selektieren jedes Vorcodierungsteilsatzes des temporären Satzes von Vorcodierungsteilsätzen, deren Wert der zweiten Zuordnungsmetrik der niedrigste ist, als die Vorcodierungsteilsätze, welche jeweils jedem des wenigstens einen Zeitfrequenzelements zugeordnet sind.

11. Verfahren nach Anspruch 1, wobei das Auswählen wenigstens eines Vorcodierungsteilsatzes für wenigstens ein Zeitfrequenzelement des wenigstens einen Zeitfrequenzelements umfasst:

- für jeden temporären Satz von Vorcodierungsteilsätzen unter einem vorbestimmten Ensemble temporärer Sätze von Vorcodierungsteilsätzen, welche jeweils ein UT von jedem der betrachteten Strahlbereiche der betrachteten Farbe umfassen, Bestimmen eines Werts einer Zuordnungsmetrik, welche als eine Funktion der Winkelpositionen der UTs der Vorcodierungsteilsätze des temporären Satzes von Vorcodierungsteilsätzen definiert ist,
- Definieren des wenigstens einen Vorcodierungsteilsatzes für das wenigstens eine Zeitfrequenzelement als einen oder mehrere Vorcodierungsteilsätze, welche in dem temporären Satz von Vorcodierungsteilsätzen umfasst sind, welcher die niedrigste Zuordnungsmetrik aufweist.

12. Verfahren nach Anspruch 1, wobei das Auswählen wenigstens eines Vorcodierungsteilsatzes für wenigstens eine Periode, welche eine gegebene Anzahl von Zeitfrequenzelementen umfasst, welche größer als oder gleich wie die maximale Anzahl von UTs innerhalb eines Strahlbereichs unter den betrachteten Strahlbereichen ist, umfasst:

- für jeden Strahlbereich unter den betrachteten Strahlbereichen:

- Zuordnen eines Rangs jedem UT des Strahlbereichs als eine Funktion der Winkelposition des UT bezüglich einer Referenzwinkelposition innerhalb des Strahlbereichs, wobei die Referenzwinkelposition für jeden Strahlbereich identisch gewählt wird,
- Erstellen eines Vektors, welcher UTs in einer absteigenden oder einer aufsteigenden Reihenfolge ihres Rangs umfasst, wobei jedes UT eine vorbestimmte Anzahl von Malen auftritt, welche eine Funktion der gegebenen Anzahl von Zeitfrequenzelementen in der Periode und der Anzahl von UTs in dem Strahlbereich ist, in aufeinanderfolgenden Positionen in dem Vektor,

- Definieren eines oder mehrerer Vorcodierungsteilsätze der Periode durch Zuordnen für ein gegebenes Zeitfrequenzelement der UTs des Vektors, welche eine gleiche Position innerhalb der Vektoren teilen, welche jeweils jedem Strahlbereich zugeordnet sind.

13. Verfahren nach Anspruch 1, wobei das Auswählen wenigstens eines Vorcodierungsteilsatzes ein Aufteilen der UTs jedes betrachteten Strahlbereichs in eine Mehrzahl von Gruppen umfasst, welche jeweils ein oder mehrere UTs umfasst.

14. Verfahren nach Anspruch 13, wobei das Aufteilen der UTs jedes Strahls in Gruppen umfasst:

- Anwenden eines vorbestimmten räumlichen Teilungsschemas an jedem Strahlbereich, um den Strahlbereich in Zonen zu teilen, welche jeweils alles oder einen Teil eines Winkelabschnitts des entsprechenden Strahlbereichs abdecken, wobei jede Zone eine äquivalente Zone in jedem anderen Strahlbereich mit der gleichen betrachteten Farbe aufweist, wobei zwei äquivalente Zonen bezüglich eines Zentrums des entsprechenden Strahlbereichs gleiche relative Abschnitte ihres jeweiligen Strahlbereichs abdecken, und
- innerhalb jedes Strahlbereichs, Definieren jeder Gruppe als die UTs, welche in einer gegebenen Zone lokalisiert sind.

15. Verfahren nach Anspruch 14, ferner umfassend:

- Definieren einer Periode als umfassend eine Anzahl von Zeitfrequenzelementen, welche gleich wie oder größer als die Summe über die Zonen eines betrachteten Strahlbereichs mit den höchsten Anzahlen von UTs ist, welche eine Gruppe, welche der betrachteten Zone oder einer äquivalenten Zone zugeordnet ist, unter allen betrachteten Strahlbereichen umfasst,
- für jede Gruppe, Auswählen, wie viele verschiedene Vorcodierungsteilsätze der Periode jedes UT der Gruppe einen Teil davon bilden werden, so dass jedes UT wenigstens einem Vorcodierungsteilsatz angehört,
- für jedes Zeitfrequenzelement der Periode, Bilden des entsprechenden Vorcodierungsteilsatzes, indem ein UT selektiert wird, welches einer gegebenen Gruppe eines gegebenen Strahlbereichs angehört, und für jeden anderen betrachteten Strahlbereich ein UT aus der Gruppe des Strahlbereichs zufällig oder willkürlich selektiert wird, welche der Zone des Strahlbereichs zugeordnet ist, welche äquivalent zu der Zone ist, welche der Gruppe des derart selektierten UT zugeordnet ist, so dass über die Periode jedes UT so vielen Vorcodierungsteilsätzen wie zuvor ausgewählt angehört.

**16.** Verfahren nach Anspruch 13, wobei die Gruppen eine quasikonstante Größe aufweisen, wobei innerhalb jedes Strahlbereichs die jeweiligen Anzahlen von UTs, welche die Gruppen umfassen, gleich sind oder sich um eins unterscheiden.

**17.** Verfahren nach Anspruch 16, wobei das Aufteilen der UTs in Gruppen umfasst:

- Anwenden eines vorbestimmten räumlichen Teilungsschemas an jedem Strahlbereich, um den Strahlbereich in Zonen ($Z_1$, ..., $Z_6$) zu teilen, welche jeweils alles oder einen Teil eines Winkelabschnitts des entsprechenden Strahlbereichs abdecken, wobei jede Zone eine äquivalente Zone in jedem anderen betrachteten Strahlbereich aufweist, wobei zwei äquivalente Zonen bezüglich eines Zentrums des entsprechenden Strahlbereichs gleiche relative Abschnitte ihres jeweiligen Strahlbereichs abdecken, und
- für jeden Strahlbereich, Definieren jeder einer Mehrzahl temporärer Gruppen als jeweils umfassend die UTs, welche in einer gegebenen Zone lokalisiert sind,
- für jeden Strahlbereich, bis all die temporären Gruppen jeweilige Anzahlen von UTs aufweisen, welche gleich sind oder sich um eins unterscheiden, neu Zuteilen zu der temporären Gruppe mit der niedrigsten Anzahl von UTs eines UT aus der temporären Gruppe, welche unter den UTs in temporären Gruppen mit einer Anzahl von UTs, welche größer als eine vorbestimmte Anzahl ist, der Zone der temporären Gruppe mit der niedrigsten Anzahl von UTs am nächsten ist,
- Definieren der Gruppen als die temporären Gruppen, welche erhalten werden, wenn all die temporären Gruppen jeweilige Anzahlen von UTs aufweisen, welche gleich sind oder sich um eins unterscheiden, wobei jede Gruppe der gleichen Zone wie derjenigen der entsprechenden temporären Gruppe zugeordnet wird.

**18.** Verfahren nach Anspruch 16, wobei das Aufteilen der UTs in Gruppen umfasst:

- Anwenden eines vorbestimmten räumlichen Teilungsschemas an jedem betrachteten Strahlbereich, um den Strahlbereich in Zonen zu teilen, welche jeweils alles oder einen Teil eines Winkelabschnitts des entsprechenden Strahlbereichs abdecken, wobei jede Zone eine äquivalente Zone in jedem anderen betrachteten Strahlbereich aufweist, wobei zwei äquivalente Zonen bezüglich eines Zentrums des entsprechenden Strahlbereichs gleiche relative Abschnitte ihres jeweiligen Strahlbereichs abdecken,
- für jeden Strahlbereich, an welchem das räumliche Teilungsschema angewendet wurde:

- Erstellen einer Distanzmatrix mit Elementen, welche jeweils einem Wert einer Distanz zwischen einem UT des Strahlbereichs und einer Zone des Strahlbereichs entsprechen, und
- Implementieren eines Zuordnungsalgorithmus mit wenigstens einer Iteration, wobei während jeder Iteration jede Zone einem UT zugeordnet wird, so dass die Summe von Distanzen zwischen zugeordneten UTs und Zonen minimal wird und die entsprechenden Elemente in der Distanzmatrix modifiziert werden, um zu verhindern, dass das entsprechende UT in einer weiteren Iteration einer anderen Zone zugeordnet wird, wobei der Zuordnungsalgorithmus endet, wenn all die UTs einer Zone zugeordnet worden sind,

wobei das Verfahren ferner ein Definieren jeder Gruppe jedes Strahlbereichs als die UTs umfasst, welche durch den Zuordnungsalgorithmus innerhalb des Strahlbereichs einer gleichen Zone zugeordnet worden sind.

**19.** Verfahren nach einem der Ansprüche 14, 16, 17 oder 18, wobei das Auswählen wenigstens eines Vorcodierungsteilsatzes ferner ein Bilden wenigstens eines Vorcodierungsteilsatzes umfasst, indem ein UT selektiert wird, welches einer gegebenen Gruppe angehört, und für jeden anderen betrachteten Strahlbereich ein UT aus der Gruppe des Strahlbereichs zufällig oder willkürlich selektiert wird, welche der Zone des Strahlbereichs zugeordnet ist, welche äquivalent zu der Zone ist, welche der Gruppe des derart selektierten UT zugeordnet ist.

**20.** Verfahren nach Anspruch 4 und nach einem der Ansprüche 16 bis 18, ferner umfassend:

- Definieren wenigstens einer Periode, welche eine Anzahl von Zeitfenstern umfasst, welche gleich wie oder größer als die Summe über die Zonen eines Strahlbereichs unter den betrachteten Strahlbereichen mit den höchsten Anzahlen von UTs ist, welche eine Gruppe, welche der betrachteten Zone oder einer äquivalenten Zone zugeordnet ist, unter allen betrachteten Strahlbereichen umfasst,
- für jede Gruppe, Auswählen, wie viele verschiedene Vorcodierungsteilsätze wenigstens einer Periode der Mehrzahl von Perioden jedes UT der Gruppe einen Teil davon bilden werden, so dass jedes UT wenigstens einem Vorcodierungsteilsatz angehört, wobei die Auswahl ferner als eine Funktion des Fairnesskriteriums ausgeführt wird,

**EP 3 247 053 B1**

- für jedes Zeitfrequenzelement der wenigstens einen Periode, Bilden des entsprechenden Vorcodierungsteilsatzes, indem ein UT selektiert wird, welches einer gegebenen Gruppe angehört, und für jeden anderen betrachteten Strahlbereich ein UT aus der Gruppe des Strahlbereichs zufällig oder willkürlich ausgewählt wird, welche der Zone des Strahlbereichs zugeordnet ist, welche äquivalent zu der Zone ist, welche der Gruppe des UT zugeordnet ist, welches einer gegebenen Gruppe angehört, so dass über die Periode jedes UT so vielen Vorcodierungsteilsätzen wie zuvor ausgewählt angehört.

21. Verfahren nach einem der vorhergehenden Ansprüche, wobei für wenigstens einen Vorcodierungsteilsatz die Zeitfrequenzressourcen durch alle oder einen Teil der Gruppen von Antennen verwendet werden, welche dem Teilsatz zugeordnet sind, um einen Strahl zu erzeugen, welcher für das UT des Vorcodierungsteilsatzes gedacht ist, welches innerhalb des entsprechenden Strahlbereichs lokalisiert ist, und wobei das Erzeugen wenigstens eines Signals ein Erzeugen, für jede Gruppe von Antennen für alle oder den Teil der Gruppen von Antennen, welche dem Teilsatz zugeordnet sind, eines Signals umfasst, welches dazu vorgesehen ist, durch die Gruppe von Antennen verwendet zu werden, um den entsprechenden Strahl zu erzeugen, wobei das Signal als eine Funktion der Daten erzeugt wird, welche für all die UTs vorgesehen sind, welche den Vorcodierungsteilsätzen angehören.

22. Verfahren nach einem der vorhergehenden Ansprüche, wobei die Vorrichtung einen Satelliten umfasst, welcher eine Mehrzahl von Antennen aufweist.

23. Verfahren nach einem der Ansprüche 1 bis 21, wobei die Vorrichtung eine Mehrzahl von Basisstationen umfasst, welche auf der Erdoberfläche lokalisiert sind, wobei jede Basisstation eine oder mehrere Antennen umfasst, welche in einer oder mehreren Gruppen von Antennen angeordnet sind.

24. Computerprogramm, umfassend Anweisungen für die Durchführung des Verfahrens nach einem der vorhergehenden Ansprüche, wenn das Computerprogramm von einem Prozessor ausgeführt wird.

**Revendications**

1. Procédé d'échange de données impliquant au moins un appareil (APP) et des terminaux d'utilisateur, ou UT, ledit appareil et les UT étant aptes à échanger des données en utilisant des ondes électromagnétiques pour transporter lesdites données, l'appareil comprenant une pluralité de groupes d'au moins une antenne (GANT$_1$, ..., GANT$_n$), chaque groupe d'au moins une antenne étant apte à émettre un faisceau d'ondes électromagnétiques pour l'envoi desdites données aux UT et à recevoir, en provenance des UT, des signaux représentatifs des données, chaque faisceau étant apte à être émis par l'appareil définissant une aire de faisceau (BA) dans laquelle des UT peuvent être situés, chaque groupe d'au moins une antenne étant associé à des ressources de temps-fréquence aptes à être utilisées par ledit groupe d'au moins une antenne pour générer le faisceau correspondant, respectivement pour recevoir un signal en provenance d'au moins un UT situé dans l'aire de faisceau correspondante, lesdites ressources de temps-fréquence étant divisées en éléments de temps-fréquence, chacun d'eux correspondant à un créneau de temps donné et, pour ledit créneau de temps, à une sous-bande de fréquences donnée, le procédé comprenant :

- la réception (S1) de données de mesure en provenance des UT, lesdites données de mesure comprenant des données de position représentatives d'au moins une position angulaire de l'UT correspondant à l'intérieur de l'aire de faisceau correspondante,
- pour au moins un élément de temps-fréquence, le choix (S2) d'au moins un sous-ensemble de précodage respectivement associé à l'un de l'au moins un élément de temps-fréquence, chaque sous-ensemble de précodage étant associé à tous les groupes d'antennes respectivement associés à une aire de faisceau donnée parmi une ou plusieurs aires de faisceau considérées ayant une couleur considérée, moyennant quoi deux aires de faisceau ont la même couleur lorsque les faisceaux correspondant partagent une même configuration de polarisation et une plage de fréquences commune, chaque sous-ensemble de précodage comprenant au plus un UT de chacune des aires de faisceau considérées, chaque sous-ensemble de précodage de l'au moins un sous-ensemble de précodage étant choisi par la sélection d'un ou plusieurs UT, chacun d'eux étant situé dans une aire de faisceau différente parmi les aires de faisceau considérées en fonction d'au moins des positions angulaires respectives des UT à l'intérieur de l'aire de faisceau correspondante et déterminé sur la base des données de position envoyées par les UT,
- la génération (S3) d'au moins un signal construit en fonction des données destinées aux UT du sous-ensemble de précodage ou provenant des UT du sous-ensemble de précodage pour transférer lesdites données aux UT ou pour recevoir lesdites données en provenance des UT en utilisant l'intégralité ou une partie des groupes

33

d'antennes associés audit au moins un sous-ensemble de précodage,

dans lequel les ressources de temps-fréquence sont divisées en périodes, chacune d'elles comprenant une pluralité de créneaux de temps, et

dans lequel le choix d'au moins un sous-ensemble de précodage comprend, pour au moins une période :

- la mise en oeuvre d'un algorithme d'allocation de ressources pour déterminer, pour chaque aire de faisceau considérée, un nombre de sous-ensembles de précodage auxquels chaque UT de ladite aire de faisceau appartiendra pendant ladite période,
- dans chaque aire de faisceau, l'association d'un rang à chaque UT de l'aire de faisceau en fonction d'au moins la position angulaire dudit UT par rapport à une position angulaire de référence à l'intérieur de ladite aire de faisceau, ladite position angulaire de référence étant prise identique pour chaque aire de faisceau,
- pour chaque aire de faisceau, la construction d'un vecteur comprenant des UT par ordre décroissant ou croissant de leur rang, chaque UT étant compris dans ledit vecteur un même nombre de fois que le nombre de fois déterminé pour l'UT correspondant au cours dudit algorithme d'allocation de ressources, à des positions consécutives dans le vecteur,
- la définition d'un ou plusieurs sous-ensembles de précodage de la période par l'association, pour un élément de temps-fréquence donné, des UT des vecteurs qui partagent une même position parmi les vecteurs respectivement associés à chaque aire de faisceau.

2. Procédé selon la revendication 1, dans lequel le choix d'au moins un sous-ensemble de précodage comprend, pour au moins une période, la sélection des un ou plusieurs UT d'au moins un sous-ensemble de précodage de sorte que les ressources de temps-fréquence d'au moins un groupe d'antennes pour au moins un élément de temps-fréquence de ladite période ne soient pas utilisées pour générer un faisceau où pour recevoir un signal en provenance d'au moins un UT.

3. Procédé selon la revendication 1 ou 2, dans lequel le choix d'au moins un sous-ensemble de précodage comprend, pour au moins une période, la définition des sous-ensembles de précodage pour les éléments de temps-fréquence de ladite période également en fonction d'une contrainte de charge, moyennant quoi les ressources de temps-fréquence de ladite période sont toutes utilisées pour générer un faisceau ou pour recevoir des signaux en provenance d'UT.

4. Procédé selon la revendication 3, dans lequel au moins un UT des sous-ensembles de précodage de ladite période est également sélectionné pour faire partie d'un ou plusieurs sous-ensembles de précodage également en fonction d'un critère d'équité, moyennant quoi ledit au moins un UT est sélectionné en fonction des sous-ensembles de précodage d'au moins un créneau de temps précédent et/ou un créneau de temps suivant afin que, pour au moins une aire de faisceau, chacun des UT de ladite aire de faisceau appartienne à un même nombre de sous-ensembles de précodage lors d'un nombre prédéterminé de créneaux de temps.

5. Procédé selon l'une quelconque des revendications précédentes, dans lequel le choix d'au moins un sous-ensemble de précodage comprend la détermination d'au moins une aire de faisceau de référence parmi les aires de faisceau (BA) considérées.

6. Procédé selon la revendication 5, dans lequel il est déterminé que ledit faisceau de référence correspond à l'aire de faisceau (BA) qui comprend le plus grand nombre d'UT parmi les aires de faisceau considérées.

7. Procédé selon la revendication 6, dans lequel le choix d'au moins un sous-ensemble de précodage comprend en outre :

- pour chaque aire de faisceau différente de l'aire de faisceau de référence parmi les aires de faisceau considérées :

-- la construction d'une matrice de distances ayant des éléments, chacun d'eux étant associé à un UT de l'aire de faisceau de référence et à un UT de l'aire de faisceau, et chacun d'eux correspondant à une valeur d'une métrique de distance prédéterminée qui est fonction au moins des positions angulaires respectives des deux UT pris en compte respectivement à l'intérieur de l'aire de faisceau de référence et à l'intérieur de l'aire de faisceau, et
-- l'application d'un algorithme d'association par l'intermédiaire duquel chacun des UT de l'aire de faisceau

34

de référence est respectivement apparié à au plus un UT de l'aire de faisceau de sorte qu'une fonction de métrique d'association des valeurs de la métrique de distance entre des UT appariés soit minimale,

- la définition d'un ou plusieurs sous-ensembles de précodage, chacun d'eux comprenant l'un des UT de l'aire de faisceau de référence et tous les UT des aires de faisceau différentes de l'aire de faisceau de référence parmi les aires de faisceau considérées qui sont appariés audit UT de l'aire de faisceau de référence.

**8.** Procédé selon la revendication 6, dans lequel le choix d'au moins un sous-ensemble de précodage comprend en outre :

- pour chaque aire de faisceau différente de l'aire de faisceau de référence parmi les aires de faisceau considérées :

-- la construction d'une matrice de distances ayant des éléments, chacun d'eux étant associé à un UT de l'aire de faisceau de référence et à un UT de l'aire de faisceau, et chacun d'eux correspondant à une valeur d'une métrique de distance prédéterminée qui est fonction au moins des positions angulaires respectives des deux UT pris en compte respectivement à l'intérieur de l'aire de faisceau de référence et à l'intérieur de l'aire de faisceau, et
-- l'application d'un algorithme d'association par l'intermédiaire duquel chacun des UT de l'aire de faisceau de référence est respectivement apparié à l'UT de l'aire de faisceau considérée correspondant à la valeur de la métrique de distance prédéterminée qui est minimale à l'intérieur de la matrice de distances moyennant quoi chaque UT de l'aire de faisceau est apparié à un nombre choisi d'UT de l'aire de faisceau de référence,

- la définition d'un ou plusieurs sous-ensembles de précodage, chacun d'eux comprenant l'un des UT de l'aire de faisceau de référence et tous les UT des aires de faisceau différentes de l'aire de faisceau de référence parmi les aires de faisceau considérées qui sont appariés audit UT de l'aire de faisceau de référence.

**9.** Procédé selon la revendication 6, dans lequel le choix d'au moins un sous-ensemble de précodage comprend en outre :

- pour l'aire de faisceau de référence et chaque aire de faisceau différente de l'aire de faisceau de référence parmi les aires de faisceau considérées, l'association, aux UT, d'au moins un rang à l'intérieur de l'aire de faisceau correspondante, ledit rang étant défini en fonction de la position angulaire de l'UT pris en compte à l'intérieur de l'aire de faisceau considérée par rapport à une position angulaire de référence à l'intérieur de ladite aire de faisceau, ladite position angulaire de référence étant prise identique pour chaque aire de faisceau,
- la définition d'un ou plusieurs sous-ensembles de précodage, chacun d'eux comprenant les UT qui partagent un même rang à l'intérieur de leur aire de faisceau respective.

**10.** Procédé selon la revendication 5, dans lequel le choix d'au moins un sous-ensemble de précodage comprend, pour au moins un élément de temps-fréquence dudit au moins un élément de temps-fréquence :

- le choix d'un ensemble d'aires de faisceau de référence parmi les aires de faisceau considérées,
- pour chaque aire de faisceau de l'ensemble d'aires de faisceau de référence :

-- la considération de ladite aire de faisceau en tant qu'une aire de faisceau de référence provisoire et, pour chaque aire de faisceau différente de l'aire de faisceau de référence provisoire parmi les aires de faisceau considérées :

--- la construction d'une matrice de distances ayant des éléments, chacun d'eux étant associé à un UT de l'aire de faisceau de référence provisoire et à un UT de l'aire de faisceau, et chacun d'eux correspondant à une valeur d'une métrique de distance prédéterminée qui est fonction au moins des positions angulaires respectives de l'UT de l'aire de faisceau de référence provisoire et de l'UT de l'aire de faisceau à l'intérieur de l'aire de faisceau de référence provisoire, respectivement à l'intérieur de l'aire de faisceau, et
--- l'application d'un algorithme d'association par l'intermédiaire duquel l'intégralité ou une partie des UT de l'aire de faisceau de référence provisoire sont respectivement appariés à l'UT de l'aire de faisceau considérée de sorte qu'une première métrique d'association en fonction de la métrique de distance entre des UT appariés soit minimale,

-- la définition d'un ensemble provisoire de sous-ensembles de précodage, chacun d'eux comprenant l'un des UT de l'aire de faisceau de référence provisoire et tous les UT des aires de faisceau différentes de l'aire de faisceau de référence provisoire qui sont appariés audit un des UT de l'aire de faisceau de référence,

- pour chaque ensemble provisoire de sous-ensembles de précodage, la détermination d'une valeur d'une deuxième métrique d'association définie au moins en fonction des positions angulaires des UT de l'ensemble provisoire de sous-ensembles de précodage, et
- la sélection de chaque sous-ensemble de précodage de l'ensemble provisoire de sous-ensembles de précodage dont une valeur de la deuxième métrique d'association est la plus basse en tant que les sous-ensembles de précodage respectivement associés à chacun dudit au moins un élément de temps-fréquence.

**11.** Procédé selon la revendication 1, dans lequel le choix d'au moins un sous-ensemble de précodage comprend, pour au moins un élément de temps-fréquence dudit au moins un élément de temps-fréquence :

- pour chaque ensemble provisoire de sous-ensembles de précodage parmi un assemblage prédéterminé d'ensembles provisoires de sous-ensembles de précodage, chacun d'eux comprenant un UT de chacune des aires de faisceau considérées de la couleur considérée, la détermination d'une valeur d'une métrique d'association définie en fonction des positions angulaires des UT des sous-ensembles de précodage de l'ensemble provisoire de sous-ensembles de précodage,
- la définition de l'au moins un sous-ensemble de précodage pour ledit au moins un élément de temps-fréquence en tant qu'un ou plusieurs sous-ensembles de précodage compris dans l'ensemble provisoire de sous-ensembles de précodage ayant la plus basse métrique d'association.

**12.** Procédé selon la revendication 1, dans lequel le choix d'au moins un sous-ensemble de précodage comprend, pour au moins une période comprenant un nombre donné d'éléments de temps-fréquence, supérieur ou égal au nombre maximal d'UT à l'intérieur d'une aire de faisceau parmi les aires de faisceau considérées :

- pour chaque aire de faisceau parmi les aires de faisceau considérées :

-- l'association d'un rang à chaque UT de l'aire de faisceau en fonction de la position angulaire dudit UT par rapport à une position angulaire de référence à l'intérieur de ladite aire de faisceau, ladite position angulaire de référence étant prise identique pour chaque aire de faisceau,
-- la construction d'un vecteur comprenant des UT par ordre décroissant ou croissant de leur rang, chaque UT apparaissant un nombre prédéterminé de fois qui est une fonction dudit nombre donné d'éléments de temps-fréquence dans la période et du nombre d'UT dans ladite aire de faisceau, à des positions consécutives dans le vecteur,

- la définition d'un ou plusieurs sous-ensembles de précodage de la période par l'association pour un élément de temps-fréquence donné des UT des vecteurs qui partagent une même position à l'intérieur de vecteurs respectivement associés à chaque aire de faisceau.

**13.** Procédé selon la revendication 1, dans lequel le choix d'au moins un sous-ensemble de précodage comprend la division des UT de chaque aire de faisceau considérée en une pluralité de groupes, chacun d'eux comprenant un ou plusieurs UT.

**14.** Procédé selon la revendication 13, dans lequel la division des UT de chaque aire de faisceau en groupes comprend :

- l'application d'un schéma de partition spatiale prédéterminé à chaque aire de faisceau pour partitionner ladite aire de faisceau en zones, chacune d'elles couvrant l'intégralité ou une partie d'une portion angulaire de l'aire de faisceau correspondante, moyennant quoi chaque zone a une zone équivalente dans chaque autre aire de faisceau ayant la même couleur considérée, deux zones équivalentes couvrant des portions relatives identiques de leur aire de faisceau respective par rapport à un centre de l'aire de faisceau correspondante, et
- à l'intérieur de chaque aire de faisceau, la définition de chaque groupe en tant que les UT qui sont situés dans une zone donnée.

**15.** Procédé selon la revendication 14, comprenant en outre :

- la définition qu'une période comprend un nombre d'éléments de temps-fréquence supérieur ou égal à la somme sur les zones d'une aire de faisceau considérée des plus grands nombres d'UT qu'un groupe qui est associé à la zone considérée ou à une zone équivalente comprend parmi toutes les aires de faisceau considérées,

- pour chaque groupe, le choix du nombre de sous-ensembles de précodage différents de ladite période dont chaque UT dudit groupe fait partie de sorte que chaque UT appartienne à au moins un sous-ensemble de précodage,
- pour chaque élément de temps-fréquence de ladite période, la formation du sous-ensemble de précodage correspondant par la sélection d'un UT appartenant à un groupe donné d'une aire de faisceau donnée et la sélection aléatoire ou arbitraire, pour chaque autre aire de faisceau considérée, d'un UT dans le groupe de l'aire de faisceau qui est associée à la zone de ladite aire de faisceau qui est équivalente à la zone associée au groupe de l'UT ainsi sélectionné, de sorte que, au cours de ladite période, chaque UT appartienne au nombre de sous-ensembles de précodage précédemment choisi.

16. Procédé selon la revendication 13, dans lequel les groupes ont une taille quasi-constante moyennant quoi, à l'intérieur de chaque aire de faisceau, les nombres respectifs d'UT que les groupes comprennent sont égaux ou différents de un.

17. Procédé selon la revendication 16, dans lequel la division des UT en groupes comprend :

- l'application d'un schéma de partition spatiale prédéterminé à chaque aire de faisceau pour partitionner ladite aire de faisceau en zones ($Z_1$, ..., $Z_6$), chacune d'elles couvrant l'intégralité ou une partie d'une portion angulaire de l'aire de faisceau correspondante, moyennant quoi chaque zone a une zone équivalente dans chaque autre aire de faisceau considérée, deux zones équivalentes couvrant des portions relatives identiques de leur aire de faisceau respective par rapport à un centre de l'aire de faisceau correspondante, et
- pour chaque aire de faisceau, la définition que chacun d'une pluralité de groupes provisoires inclut les UT qui sont situés dans une zone donnée,
- pour chaque aire de faisceau, jusqu'à ce que tous les groupes provisoires aient des nombres respectifs d'UT qui sont égaux ou différents de un, la réallocation, au groupe provisoire ayant le plus petit nombre d'UT, d'un UT du groupe provisoire qui, parmi les UT dans des groupes provisoires ayant un nombre d'UT supérieur à un nombre prédéterminé, est le plus proche de la zone dudit groupe provisoire ayant le plus petit nombre d'UT,
- la définition que les groupes sont les groupes provisoires obtenus lorsque tous les groupes provisoires ont des nombres respectifs d'UT qui sont égaux ou différents de un, chaque groupe étant associé à la même zone que celle du groupe provisoire correspondant.

18. Procédé selon la revendication 16, dans lequel la division des UT en groupes comprend :

- l'application d'un schéma de partition spatiale prédéterminé à chaque aire de faisceau considérée pour partitionner ladite aire de faisceau en zones, chacune d'elles couvrant l'intégralité ou une partie d'une portion angulaire de l'aire de faisceau correspondante, moyennant quoi chaque zone a une zone équivalente dans chaque autre aire de faisceau considérée, deux zones équivalentes couvrant des portions relatives identiques de leur aire de faisceau respective par rapport à un centre de l'aire de faisceau correspondante,
- pour chaque aire de faisceau à laquelle le schéma de partition spatiale a été appliqué :

-- la construction d'une matrice de distances ayant des éléments, chacun d'eux correspondant à une valeur d'une distance entre un UT de l'aire de faisceau et une zone de ladite aire de faisceau, et
-- la mise en oeuvre d'un algorithme d'association ayant au moins une itération lors de chacune desquelles chaque zone est associée à un UT de sorte que la somme de distances entre des UT associés et des zones soit minimale et les éléments correspondants dans la matrice de distances soient modifiés pour empêcher que l'UT correspondant soit associé à une autre zone dans une autre itération, ledit algorithme d'association se terminant lorsque tous les UT ont été associés à une zone,

le procédé comprenant en outre la définition de chaque groupe de chaque aire de faisceau en tant que les UT qui ont été associés à une même zone à l'intérieur de ladite aire de faisceau par l'intermédiaire dudit algorithme d'association.

19. Procédé selon la revendication 14, 16, 17 ou 18, dans lequel le choix d'au moins un sous-ensemble de précodage comprend en outre la formation d'au moins un sous-ensemble de précodage par la sélection d'un UT appartenant à un groupe donné et la sélection aléatoire ou arbitraire, pour chaque autre aire de faisceau considérée, d'un UT dans le groupe de ladite aire de faisceau qui est associé à la zone de ladite aire de faisceau qui est équivalente à la zone associée au groupe de l'UT ainsi sélectionné.

20. Procédé selon la revendication 4 et l'une quelconque des revendications 16 à 18, comprenant en outre :

- la définition d'au moins une période comprenant un nombre de créneaux de temps supérieur ou égal à la somme sur les zones d'une aire de faisceau parmi les aires de faisceau considérées des plus grands nombres d'UT qu'un groupe qui est associé à la zone considérée ou à une zone équivalente comprend parmi toutes les aires de faisceau considérées,
- pour chaque groupe, le choix du nombre de sous-ensembles de précodage différents d'au moins une période de ladite pluralité de périodes dont chaque UT dudit groupe fait partie de sorte que chaque UT appartienne à au moins un sous-ensemble de précodage, le choix étant en outre effectué en fonction dudit critère d'équité,
- pour chaque élément de temps-fréquence de ladite au moins une période, la formation du sous-ensemble de précodage correspondant par la sélection d'un UT appartenant à un groupe donné et le choix aléatoire ou arbitraire, pour chaque autre aire de faisceau considérée, d'un UT du groupe de ladite aire de faisceau qui est associée à la zone de ladite aire de faisceau qui est équivalente à la zone associée au groupe dudit UT appartenant à un groupe donné, de sorte que, au cours de ladite période, chaque UT appartienne au nombre de sous-ensembles de précodage précédemment choisi.

21. Procédé selon l'une quelconque des revendications précédentes, dans lequel, pour au moins un sous-ensemble de précodage, les ressources de temps-fréquence sont utilisées par l'intégralité ou une partie des groupes d'antennes associés audit sous-ensemble pour générer un faisceau destiné à l'UT dudit sous-ensemble de précodage situé à l'intérieur de l'aire de faisceau correspondante, et dans lequel la génération d'au moins un signal comprend la génération, pour chaque groupe d'antennes de ladite intégralité ou partie des groupes d'antennes associés audit sous-ensemble, d'un signal destiné à être utilisé par ledit groupe d'antennes pour générer le faisceau correspondant, ledit signal étant généré en fonction des données destinées à tous les UT appartenant auxdits sous-ensembles de précodage.

22. Procédé selon l'une quelconque des revendications précédentes, dans lequel l'appareil comprend un satellite ayant ladite pluralité d'antennes.

23. Procédé selon l'une quelconque des revendications 1 à 21, dans lequel l'appareil comprend une pluralité de stations de base situées à la surface de la terre, chaque station de base comprenant une ou plusieurs antennes agencées dans un ou plusieurs groupes d'antennes.

24. Programme informatique comprenant des instructions pour la mise en oeuvre du procédé selon l'une quelconque des revendications précédentes lorsque le programme informatique est exécuté par un processeur.

FIG. 1

FIG. 2

**FIG. 3**

**FIG. 4**

FIG. 5

FIG. 6

FIG. 7a

FIG. 7b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103796319